(19) Europäisches Patentamt
European Patent Office
Office européen des brevets

(11) EP 3 825 919 B1

(12) FASCICULE DE BREVET EUROPEEN

(45) Date de publication et mention de la délivrance du brevet:
**23.07.2025 Bulletin 2025/30**

(21) Numéro de dépôt: **20207984.4**

(22) Date de dépôt: **17.11.2020**

(51) Classification Internationale des Brevets (IPC):
***H04W 48/16*** $^{(2009.01)}$ ***H04W 48/20*** $^{(2009.01)}$
***G06N 3/092*** $^{(2023.01)}$ ***G06N 3/098*** $^{(2023.01)}$
***G06N 3/044*** $^{(2023.01)}$ ***G06N 3/045*** $^{(2023.01)}$

(52) Classification Coopérative des Brevets (CPC):
**G06N 3/044; G06N 3/045; G06N 3/092; G06N 3/098; H04W 48/16;** H04W 48/20

# (54) MÉTHODE D'ASSOCIATION D'ÉQUIPEMENTS D'UTILISATEURS DANS UN RÉSEAU CELLULAIRE AU MOYEN D'UN APPRENTISSAGE PAR RENFORCEMENT MULTI-AGENT

VERFAHREN ZUR ZUORDNUNG VON BENUTZERGERÄTEN IN EINEM ZELLULAREN NETZ MITTELS LERNEN DURCH MULTI-AGENTEN-VERSTÄRKUNG

METHOD FOR ASSOCIATION OF USER EQUIPMENT IN A CELLULAR NETWORK BY MEANS OF MULTI-AGENT REINFORCEMENT LEARNING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2019 FR 1912906**

(43) Date de publication de la demande:
**26.05.2021 Bulletin 2021/21**

(73) Titulaire: **Commissariat à l'Energie Atomique et aux Energies Alternatives**
**75015 Paris (FR)**

(72) Inventeurs:
- **SANA, Mohamed**
  **38054 GRENOBLE CEDEX 9 (FR)**
- **DE DOMENICO, Antonio**
  **38054 GRENOBLE CEDEX 9 (FR)**

(74) Mandataire: **Brevalex**
**56, Boulevard de l'Embouchure**
**B.P. 27519**
**31075 Toulouse Cedex 2 (FR)**

(56) Documents cités:
- **NAN ZHAO ET AL: "Deep Reinforcement Learning for User Association and Resource Allocation in Heterogeneous Cellular Networks", IEEE TRANSACTIONS ON WIRELESS COMMUNICATIONS., vol. 18, no. 11, 11 November 2019 (2019-11-11), US, pages 5141 - 5152, XP055718441, ISSN: 1536-1276, DOI: 10.1109/TWC.2019.2933417**
- **AFSHIN OROOJLOOYJADID ET AL: "A Review of Cooperative Multi-Agent Deep Reinforcement Learning", ARXIV.ORG, CORNELL UNIVERSITY LIBRARY, 201 OLIN LIBRARY CORNELL UNIVERSITY ITHACA, NY 14853, 11 August 2019 (2019-08-11), XP081459916**
- **HERNANDEZ-LEAL PABLO ET AL: "A survey and critique of multiagent deep reinforcement learning", AUTONOMOUS AGENTS AND MULTI-AGENT SYSTEMS, KLUWER ACADEMIC PUBLISHERS, DORDRECHT, US, vol. 33, no. 6, 16 October 2019 (2019-10-16), pages 750 - 797, XP036911160, ISSN: 1387-2532, [retrieved on 20191016], DOI: 10.1007/S10458-019-09421-1**
- **KAI ARULKUMARAN ET AL: "A Brief Survey of Deep Reinforcement Learning", CORR (ARXIV), vol. 1708.05866v2, 28 September 2017 (2017-09-28), pages 1 - 16, XP055447489**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 825 919 B1

## Description

### DOMAINE TECHNIQUE

La présente invention concerne le domaine des réseaux cellulaires et plus particulièrement l'association d'équipements d'utilisateurs (UEs) à des stations de base dans un réseau hétérogène tel que ceux de la cinquième génération (5G). Elle concerne également le domaine de l'intelligence artificielle et plus particulièrement celui de l'apprentissage par renforcement multi-agent ou MARL (*Multi-Agent Reinforcement Learning).*

### ÉTAT DE LA TECHNIQUE ANTÉRIEURE

Les méthodes association de terminaux mobiles ou UEs (*User Equipments*) aux stations de base d'un réseau cellulaire ont fait l'objet de très nombreuses recherches ces vingt dernières années. De manière générale, une méthode d'association vise à déterminer, pour chaque terminal mobile, la station de base (autrement dit la cellule) qui devra la servir, compte tenu des besoins de l'ensemble des utilisateurs (débit, rapport signal sur bruit, latence, etc.) et des contraintes relatives aux stations de base (puissance maximale d'émission, niveau d'interférence, etc.). Une grande diversité de méthodes d'association a été proposée dans l'état de la technique, selon la fonction objective à atteindre et des contraintes à respecter.

Avec le déploiement de réseaux cellulaires de $5^{ème}$ génération, les techniques d'association doivent évoluer pour faire face à de nouveaux défis. En effet, les réseaux 5G sont hétérogènes par nature, du fait de la superposition d'une couche dense de petites cellules ou SBS (*Small cell Base Stations*) opérant notamment dans la bande millimétrique, destinée à assurer une couverture à faible distance et débit élevé, et d'une couche peu dense de macrocellules ou MBS (*Macro cell Base Stations*), opérant dans la bande sub-6 GHz, destinée à assurer une couverture continue. Les petites cellules disposent d'un grand nombre de ressources de transmission que ce soit en termes de ressources spectrales ou en ressources spatiales (formation de faisceaux directifs). En outre, l'association d'un terminal mobile avec une station de base (SBS ou MBS) nécessite de prendre en compte la charge des différentes stations de base, les niveaux d'interférence, les débits des différents utilisateurs, les configurations possibles de faisceaux etc. Il en résulte que l'optimisation de la performance globale du réseau devient particulièrement complexe. On peut montrer que la recherche de l'association optimale est en fait un problème combinatoire dont la complexité est de classe NP, autrement dit de complexité évoluant de manière exponentielle avec le nombre d'utilisateurs dans le réseau.

Une méthode d'association de terminaux mobiles à des stations de base d'un réseau hétérogène a été décrite dans deux articles de N. Zhao et al. L'un est intitulé "Deep Reinforcement Learning for User Association and Resource Allocation in Heterogeneous Cellular Networks" et est publié dans IEEE Transactions on Wireless Communications, vol. 18, no. 11, pp. 5141-5152, 2019. L'autre est intitulé « Deep reinforcement learning for user association and resource allocation in heterogeneous networks » et est publié dans Proc. of IEEE Global Communications Conference (GLOBECOM), pp. 1-6, 2018. Cette méthode d'association fait appel à une méthode d'apprentissage par renforcement connue sous le nom de Q-learning. On pourra trouver une description de cette méthode dans l'article de C. Watkins et al. « intitulé « Q-learning » publié dans la revue Machine Learning, vol. 8, No. 3-4, pp. 279-292, 1992. On rappelle qu'une méthode d'apprentissage par renforcement est une méthode d'apprentissage automatique dans laquelle un agent autonome, plongé dans un environnement, apprend des actions à effectuer à partir d'expériences, de manière à optimiser une récompense cumulée au cours du temps. L'agent prend des décisions en fonction de son état courant et l'environnement lui procure des récompenses en fonction des actions qu'il effectue. Dans l'article précité, la méthode d'association est du type multi-agent, chaque équipement d'utilisateur jouant le rôle d'un agent et apprenant à partir de son environnement, les différents agents opérant de manière coopérative. Toutefois, cette méthode d'association utilise un espace d'états représentant la satisfaction (ou l'absence de satisfaction) d'une qualité de service (QoS) minimale ($\Omega_i$) pour chacun des utilisateurs du réseau, chaque utilisateur étant par ailleurs informé de la satisfaction ou non des qualités de service requises par les autres utilisateurs. Ce type de coopération suppose l'échange d'un nombre important de messages (*message passing*) entre les terminaux mobiles via des canaux de contrôle et donc la mobilisation de ressources de transmission à cet effet. En outre, la détermination de la politique d'association suppose l'utilisation d'un réseau de neurones DDQN (*Double Deep Q-network*) dont la taille des variables d'entrée croît avec le nombre d'utilisateurs. Il en résulte que la méthode d'association proposée n'est pas scalable avec le nombre d'utilisateurs dans le réseau. En l'occurrence, si un utilisateur rejoint ou quitte une cellule, cela implique une modification de l'architecture du réseau de neurones de chacun des utilisateurs.

Un objet de la présente invention est par conséquent de proposer une méthode d'association d'équipements d'utilisateurs à des stations de base d'un réseau cellulaire, en particulier d'un réseau hétérogène tel qu'un réseau 5G, mettant en œuvre un algorithme d'apprentissage par renforcement multi-agent, qui ne nécessite pas un échange de messages entre utilisateurs et qui soit scalable tant au regard du nombre d'utilisateurs que du nombre de stations de base dans le réseau.

## EXPOSÉ DE L'INVENTION

La présente invention est définie par une méthode d'association d'équipements d'utilisateurs à des stations de base d'un réseau cellulaire, ladite méthode d'association mettant en œuvre une méthode d'apprentissage par renforcement multi-agent, un agent étant associé à chaque équipement d'utilisateur, ladite méthode d'association étant particulière en ce que :

- chaque équipement d'utilisateur $u_j$ détermine un ensemble $S_j$ de stations de base dans la couverture de chacune desquelles il se trouve ;
- chaque agent associé à un équipement d'utilisateur sélectionne à partir d'une observation partielle ($\mathbf{o}_j(t)$ ) de son environnement à un instant donné, une action ( $a_j(t)$ ) parmi une pluralité d'actions possibles, chaque action possible correspondant à une demande d'association de l'équipement d'utilisateur à une station de base ($BS_i \in S_j$ ) dudit ensemble, ladite action étant sélectionnée sur la base d'une stratégie ($\pi_j$) visant à maximiser une valeur d'action calculée comme l'espérance de la somme d'une pluralité de récompenses futures, actualisées audit instant donné , l'équipement d'utilisateur transmettant à un contrôleur central une demande d'association correspondant à l'action ainsi sélectionnée ;
- chaque station de base détermine si elle peut satisfaire l'ensemble des requêtes d'association reçues des équipements d'utilisateurs compte tenu des ressources de transmission dont elle dispose et dans la négative en informe le contrôleur central;
- le contrôleur central calcule une récompense ($r(t)$), commune aux actions des agents, et la diffuse à tous les équipements d'utilisateurs, cette récompense étant nulle si l'une des stations de base ne peut satisfaire l'ensemble des requêtes d'association reçues et égale à la valeur prise par une fonction d'utilité du réseau, représentative de la qualité de service offerte aux équipements d'utilisateurs, sinon.

Selon une première variante, la fonction d'utilité $U(t)$ du réseau est égale à la somme des capacités des liaisons descendantes entre les équipements d'utilisateurs et les stations de base qui leur sont associées ou bien à la somme des logarithmes de ces capacités.

Selon une seconde variante, la fonction d'utilité du réseau est égale à $U(t)=\sum_{i,j} x_{ij}\min\left(D_j,R_{ij}\right)$ où $D_j$ est le débit requis par un équipement d'utilisateur $u_j$ et $R_{ij}$ est la capacité de la liaison descendante entre la station de base $BS_i$ et l' équipement d'utilisateur $u_j$ , $x$ = 1 si la station de base $BS_i$ est associée à l'équipement d'utilisateur $u_j$ et $x_{ij}$ = 1 sinon.

Le réseau cellulaire pourra être typiquement un réseau hétérogène constitué d'une couche de macro-cellules et d'une couche de petites cellules, le contrôleur central étant alors situé dans la station de base d'une macro-cellule.

Selon un premier mode de réalisation, l'agent associé à un équipement d'utilisateur $u_j$ prédit les valeurs d'action des différentes actions possibles au moyen d'un réseau de neurones artificiels récurrent (DRQN) recevant en entrée un vecteur d'observation de l'environnement $\mathbf{o}_j(t)$ à un instant donné et fournissant en sortie une prédiction des valeurs d'action pour les différentes actions possibles correspondant aux stations de base de l'ensemble $S_j$.

Le réseau de neurones comprend typiquement une couche d'entrée, une première pluralité de couches densément connectées, une couche LSTM, une seconde pluralité de couches densément connectées et une couche de sortie.

Avantageusement, le vecteur d'observation de l'environnement comprend l'action $a_j(t\text{-}1)$ ayant été effectuée par l'équipement d'utilisateur $u_j$ à l'instant précédent ; la réponse $ACK_j(t\text{-}1)$ à la requête d'association, renvoyée par la station de base à laquelle elle a été transmise ; une mesure de la puissance reçue de la station de base à l'instant donné $t$, $RSSI_j(t)$ ; le débit $D_j(t)$ requis par le terminal mobile à l'instant $t$, une estimation $R_j(t\text{-}1)$ de la capacité de canal de la liaison descendante à l'instant précédent $t$ -1; une estimation $R(t$ -1) de la somme des capacités des liaisons descendantes des équipements d'utilisateurs à l'instant précédent.

Le réseau de neurones récurrents peut alors être entrainé sur un ensemble d'expériences $e_j(t) = (\mathbf{o}_j(t),a(t),r(t),\mathbf{o}_j(t+1))$, chaque expérience appartenant à un épisode, $\{e_j(t);t = 1,..,T\}$ , une expérience étant définie comme un quadruplet constitué du vecteur d'observation $\mathbf{o}_j(t)$ au temps $t$ donné, de l'action $a_j(t)$ sélectionnée par l'agent à cet instant, de la récompense reçue du contrôleur suite à cette action, et d'un vecteur d'observation, $\mathbf{o}_j(t+1)$, à l'instant suivant, lesdites expériences étant stockées dans une mémoire locale $M_j$ de l'équipement d'utilisateur $u_j$.

Selon une première variante, les coefficients synaptiques du réseau de neurones récurrent sont représentés par un vecteur de paramètres, $\theta_j$, ledit vecteur de paramètres étant obtenu par une descente de gradient stochastique sur une fonction de perte moyennée par mini-lot $L_j\left(\boldsymbol{\theta}_j\right)=E_{e_j^b(t)\sim B_j}\left(\left[\delta_j^b(t)\right]^2\right)$ où $\delta_j^b(t)$ est une erreur TD de la prédiction de valeur d'action pour une expérience du mini-lot.

Selon une seconde variante, les coefficients synaptiques du réseau de neurones récurrent sont représentés par un vecteur de paramètres, $\theta_j$, ledit vecteur de paramètres étant obtenu par une descente de gradient stochastique sur une fonction de perte moyennée par mini-lot $L_j\left(\boldsymbol{\theta}_j\right)=E_{e_j^b(t)\sim B_j}\left(\left[w_j^b\delta_j^b(t)\right]^2\right)$ où $\delta_j^b(t)$ est une erreur TD de la prédiction de valeur d'action pour une expérience du mini-lot et $w_j^b=\chi$ si l'erreur TD est positive, $w_j^b=\beta$ dans le cas contraire, où $\beta,\chi$ sont des réels vérifiant $0<\beta\ll\chi\leq 1$.

Selon un second mode de réalisation, le réseau cellulaire est confronté à une pluralité de tâches $T=\{T^{(1)},T^{(2)},..,T^{(N)}\}$, chaque tâche étant définie par un ensemble de services requis par les différents équipements d'utilisateurs $T^{(n)}=\left\{T_1^{(n)},T_2^{(n)},...,T_{N_u}^{(n)}\right\}$ où $T_j^{(n)}$ représente un service requis par l'équipement d'utilisateur $u_j$ dans la tâche $T^{(n)}$, chaque tâche $T^{(n)}$ définissant une classe d'environnement pour l'ensemble des utilisateurs . L'agent associé à un équipement d'utilisateur $u_j$ prédit les valeurs d'action des différentes actions possibles au moyen d'un réseau de neurones récurrent, dit réseau élève, ayant été entrainé pendant une période d'apprentissage sur les prédictions respectives d'une pluralité de réseaux de neurones récurrents, dits réseau maîtres, chaque réseau maître étant associé à une tâche du réseau et ayant été lui-même entraîné sur un ensemble d'expériences $e_j(t)=(\mathbf{o}_j(t),a_j(t),r_j(t),\mathbf{o}_j(t+1))$ réalisées dans le cadre de cette tâche, une expérience étant définie comme un quadruplet constitué du vecteur d'observation $\mathbf{o}_j(t)$ au temps $t$ donné, de l'action $a_j(t)$ sélectionnée par l'agent à cet instant, de la récompense reçue du contrôleur suite à cette action, et d'un vecteur d'observation, $\mathbf{o}_j(t+1)$, à l'instant suivant, les expériences réalisées dans le cadre d'une tâche $T^{(n)}$ étant stockées dans une mémoire locale $M_j^{(n)}$ de l'équipement d'utilisateur $u_j$.

Avantageusement, au terme de l'entraînement de chaque réseau maître, celui-ci prédit les valeurs d'actions $\mathbf{Q}_j\left(\mathbf{o}_j(t)\middle|\boldsymbol{\theta}_j^{(n)*}\right)$ pour les vecteurs d'action issus des expériences réalisées dans le cadre de la tâche associée à ce réseau maître, lesdites prédictions de valeur d'action étant stockées avec les vecteurs d'observation correspondants, dans une mémoire commune à l'ensemble des tâches, notée $SM_j$, et après que tous les réseaux maîtres ont été entraînés, le réseau élève est entrainé de manière supervisée sur les données d'entraînement ( $\mathbf{o}_j(t),\mathbf{Q}_j\left(\mathbf{o}_j(t)\middle|\boldsymbol{\theta}_j^{(n)*}\right)$ ), $\mathbf{o}_j(t)$ étant vecteur d'entrée du réseau élève et $\mathbf{Q}_j\left(\mathbf{o}_j(t)\middle|\boldsymbol{\theta}_{1,j}^{*}\right)$ étant l'étiquette associée.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique une situation d'association d'équipements d'utilisateurs à des stations de base dans un réseau hétérogène ;

La Fig. 2 représente un ordinogramme d'une méthode d'association utilisant une méthode d'apprentissage par renforcement multi-agent selon un premier mode de réalisation de la présente invention ;

La Fig. 3 représente de manière schématique les échanges de messages entre différents éléments d'un réseau hétérogène pour la mise en œuvre de la méthode d'association de la Fig. 2;

La Fig. 4 représente de manière schématique un réseau de neurones artificiels récurrent (DRQN) utilisé pour approximer la fonction de valeur d'action dans la méthode de la Fig. 2 ;

La Fig. 5 représente un ordinogramme d'une méthode d'entrainement du réseau de neurones artificiels de la Fig. 4 ;

La Fig. 6 représente un ordinogramme d'une méthode d'association utilisant une méthode d'apprentissage par renforcement multi-agent selon un second mode de réalisation de la présente invention.

## EXPOSÉ DÉTAILLÉ DE MODES DE RÉALISATION PARTICULIERS

On considérera dans la suite un réseau cellulaire composé d'une pluralité de stations de base. Sans perte de généralité et à titre d'illustration seulement, nous supposerons que ce réseau cellulaire est hétérogène, c'est à dire qu'il résulte de la superposition d'une couche de petites cellules (SBS) de faible couverture mais potentiellement capable d'offrir à chaque UE un débit élevé avec une couche de macro-cellules (MBS) garantissant la continuité de la couverture du réseau en offrant une plus grande portée. Un exemple typique d'application est celui d'un réseau 5G dans lequel les cellules SBS opèrent dans la bande millimétrique et les cellules MBS opèrent dans la bande sub-6 GHz.

La Fig. 1 représente un exemple d'association d'équipements d'utilisateur (UEs) avec des stations de base dans un tel réseau hétérogène.

On a noté $u_1,...,u_8$ les équipements d'utilisateurs (par exemples des terminaux mobiles), $SBS_1,SBS_2,SBS_3$ les stations de base de trois petites cellules et $MBS$ la station de base d'une macro-cellule.

A un instant $t$ donné, chaque équipement d'utilisateur $u_j$ requiert un certain débit $D_j(t)$ pour satisfaire à une contrainte de qualité de service (QoS). Si ce terminal est associé avec une station de base $BS_i$ (on notera conventionnellement $BS_0$ la station MBS et $BS_i$, $i=1,..,N_s$ les $N_s$ stations de base SBS), le canal entre l'équipement d'utilisateur et la station de base associée doit offrir une capacité $R_{ij}=B_{ij}\log(1+SNR_{ij})$ telle que $R_{ij}\geq D_j$ où $B_{ij}$ et $SNR_{ij}$ sont respectivement la bande passante et le rapport signal à bruit plus interférence relatifs au canal. L'interférence à prendre en compte est ici l'interférence due aux autres communications au sein de la même cellule (interférence intracellulaire) ainsi que celle due aux communications des autres cellules (interférence intercellulaire).

Pour chaque station de base $BS_i$, on note $U_i$ l'ensemble des équipements d'utilisateurs qui sont situés dans la couverture de $BS_i$. Ainsi dans l'exemple illustré, $U_0=\{u_1,..,u_9\}$, $U_1=\{u_1,u_2,u_3,u_8,u_9\}$, $U_2=\{u_1,u_4,u_5,u_6,u_8\}$ et $U_3=\{u_6,u_7,u_8,u_9\}$. De manière réciproque, pour un équipement d'utilisateur $u_j$ donné, on note $S_j$ l'ensemble des stations de base susceptibles de le servir. Ainsi, dans l'exemple illustré $S_1=\{BS_0,BS_1,BS_2\}$, $S_5=\{BS_0,BS_2\}$, et $S_8=\{BS_0,BS_1,BS_2,BS_3\}$.

On recherche à associer les équipements d'utilisateur aux stations de base de manière à maximiser une fonction d'utilité, $U(t)$, sur l'ensemble du réseau tout en respectant un certain nombre de contraintes portant sur les ressources de transmission à la disposition des stations de base. Si l'on indique par $x_{ij}=1$ l'association de l'équipement d'utilisateur $u_j$ avec la station de base $BS_i$ et, $x_{ij}=0$ l'absence d'association, et si l'on suppose qu'un équipement d'utilisateur ne peut s'associer qu'avec une seule station de base, l'association recherchée est obtenue en résolvant le problème d'optimisation :

$$\max_{x_{ij}} U(t) \quad (1\text{-}1)$$

en respectant les contraintes :

$$x_{ij}=\{0,1\} \quad (1\text{-}2)$$

$$\sum_{u_j\in U_i} x_{ij}\leq N_i \ ,\ \forall BS_i \ ,\ i=0,..,N_s \quad (1\text{-}3)$$

$$\sum_{BS_i\in S_j} x_{ij}=1, \quad \forall u_j,\ j=1,..,N_u \quad (1\text{-}4)$$

où $N_i$ est le nombre de ressources de transmission disponibles (par exemple le nombre de faisceaux distincts) à la station de base $BS_i$, $N_s$ est le nombre de SBS et $N_u$ est le nombre d'équipements d'utilisateur. La contrainte (1-3) traduit simplement le fait que les équipements d'utilisateurs ne peuvent être servis par une station de base qu'à concurrence des ressources de transmission dont elle dispose, la contrainte (1-4) que chaque équipement d'utilisateur doit être servi par une station de base. En pratique, la quantité de ressources de la station de base MB S ($BS_0$) étant sensiblement plus élevée que celles des stations de base BS ($BS_i$, $i=1,...,Ns$), la contrainte sera quasiment toujours satisfaite pour $i=0$. Idéalement, les requêtes de débit des différents utilisateurs doivent être respectées et dans ce cas :

$$D_j\leq \sum_{BS_i\in S_j} x_{ij}R_{ij} \quad (1\text{-}5)$$

La fonction d'utilité du réseau pourra être choisie comme la capacité totale pouvant être offerte aux différents

utilisateurs, soit :

$$U(t)=\sum_{i,j} x_{ij} R_{ij} \qquad (2\text{-}1)$$

le cas échéant, en tenant compte des requêtes de débit des utilisateurs :

$$U(t)=\sum_{i,j} x_{ij} \min\left(D_j, R_{ij}\right) \qquad (2\text{-}2)$$

voire encore en respectant une équité proportionnelle (*proportional fairness*) entre les différents utilisateurs :

$$U(t)=\sum_{i,j} x_{ij} \log_2\left(R_{ij}\right) \qquad (2\text{-}3)$$

D'autres fonctions d'utilité du réseau pourront être envisagées par l'homme du métier (par exemple en tenant compte des types de service xMBB, uMTC et mMTC requis par les différents utilisateurs). De manière générale, la fonction d'utilité du réseau est représentative d'une qualité de service offert aux utilisateurs du réseau, notamment en termes de capacité et/ou de latence.

L'idée à la base de l'invention est d'utiliser un algorithme d'apprentissage par renforcement multi-agent ou MARL (*Reinforcement Learning*), chaque équipement d'utilisateur (UE) apprenant de manière indépendante son association optimale en fonction des observations de son environnement et de l'action effectuée (demande d'association) à partir d'une récompense commune à l'ensemble des utilisateurs.

Chaque équipement d'utilisateur $u_j$ possède une connaissance partielle de l'état de son environnement à l'instant *t* $s_j(t)$ au moyen d'une observation. On choisira avantageusement comme observation à l'instant *t* le vecteur défini par :

$$\mathbf{o}_j(t)=\left(a_j(t-1), ACK_j(t-1), RSSI_j(t), D_j(t), R_j(t-1), R(t-1)\right)^T \qquad (3)$$

où $a_j(t\text{-}1)$ est l'action ayant été effectuée par l'utilisateur $u_j$ à l'instant précédent, $ACK_j(t\text{-}1)$ est la réponse à la requête d'association, renvoyée par la station de base à laquelle elle a été transmise (par exemple $ACK_j(t\text{-}1) = 1$ si l'association est acceptée $ACK_j(t\text{-}1) = 0$ si l'association est refusée), $RSSI_j(t)$ est la mesure à l'instant *t* de la puissance reçue de la station de base à laquelle le terminal mobile (UE) s'est associé, $D_j(t)$ est le débit requis par le terminal mobile à l'instant *t*, $R_j(t\text{-}1)$ est une estimation de la capacité de canal de la liaison descendante à l'instant précédent t-1 (autrement dit $R_j(t-1) = B_{ij}(t\text{-}1)\,log_2(1+SNR_{ij}(t\text{-}1))$ où $B_{ij}(t\text{-}1)$ et $SNR_{ij}(t\text{-}1)$ sont respectivement la bande passante et le rapport signal sur bruit plus interférence à l'instant précédent, (*t*-1) et $R(t\text{-}1)$ est la capacité totale du réseau obtenue à l'instant précédent *t*-1, calculée sur l'ensemble des utilisateurs, autrement dit $R(t-1)=\sum_{i=1}^{Ns}\sum_{j=1}^{Nu} x_{ij}R_{ij}(t-1)$ ). Il convient de noter que certaines composantes du vecteur d'observation $\mathbf{o}_j(t)$ sont optionnelles. Ainsi par exemple, s'il n'est pas nécessaire de prendre en compte la demande de débit courante de l'utilisateur (service correspondant à une catégorie *Best Effort*) la composante $D_j(t)$ pourra être omise.

L'observation $\mathbf{o}_j(t)$ de l'environnement est qualifiée de partielle dans la mesure où elle est non-exhaustive. Une observation exhaustive de l'environnement supposerait notamment que les mesures de RSSI, les estimations de capacité de canal, etc., effectuées par les autres utilisateurs soient communiquées à l'utilisateur $u_j$ par voie de messages.

L'action d'un équipement d'utilisateur à l'instant *t* est définie par la requête d'association de cet utilisateur, soit $a_j(t) = i$ où $BS_i \in S_j$. Cette action est décidée par l'utilisateur selon une stratégie $\pi_j$ qui sera explicitée plus loin.

Après que l'agent associé à l'utilisateur $u_j$ a observé le vecteur $\mathbf{o}_j(t)$ et effectué l'action $a_j(t)$ (c'est-à-dire a requis une association à une station de base), celui-ci reçoit une récompense *r(t)* qui n'est pas propre à l'équipement de l'utilisateur en question mais commune à l'ensemble des utilisateurs. Plus précisément, celle-ci est avantageusement définie par :

$$r(t)=0 \quad \text{si} \quad \exists BS_i \text{ tel que } \sum_{u_j\in U_i} x_{ij} > N_i \qquad (4\text{-}1)$$

$$r(t)=U(t) \quad \text{sinon} \tag{4-2}$$

En d'autres termes, si les requêtes de l'ensemble des utilisateurs ne peuvent être conjointement satisfaites, la récompense obtenue est nulle et sinon la récompense est donnée par la valeur de la fonction d'utilité du réseau à l'instant considéré.

Les équipements d'utilisateur apprennent ainsi de manière indépendante une stratégie (*policy*) qui leur permet de maximiser la somme de récompenses au cours du temps, chaque récompense étant affectée d'un facteur d'actualisation $\gamma$ déterminant le poids des récompenses futures dans le choix de l'action à l'instant *t*. En pratique, pour une séquence (ou épisode) de durée finie *T*, chaque équipement d'utilisateur $u_j$ suit une stratégie $\pi_j$ pour maximiser en chaque instant *t* :

$$G_j(t)=\sum_{\tau=1}^{T}\gamma^{\tau-1}r_j(t+\tau) \tag{5}$$

où $r_j(t) = r(t)$ est la récompense de l'équipement d'utilisateur $u_j$, égale à la récompense commune.

La stratégie $\pi_j$ d'un équipement d'utilisateur $u_j$ est déterminée à partir des expériences qu'il enregistre au cours du temps. On définit une expérience de l'utilisateur $u_j$ à l'instant *t* comme le quadruplet :

$$e_j(t)=\left(\mathbf{o}_j(t),a_j(t),r_j(t),\mathbf{o}_j(t+1)\right) \tag{6}$$

Autrement dit, une expérience consiste à partir d'une observation donnée de l'environnement et d'une action donnée de l'agent, d'enregistrer la récompense obtenue et la nouvelle observation de l'environnement.

Un épisode est représenté par une séquence d'expériences successives $e_j(t)$, $t = 1,...,T$. Les expériences successives d'un épisode, sont stockées dans une mémoire locale $M_j$ de l'UE $u_j$.

A partir des expériences qu'il a enregistrées, chaque agent met à jour sa stratégie $\pi_j$. Cette mise à jour a lieu dans une phase de calibration (mise à jour off-line), le cas échéant par simulation, et peut être poursuivie ultérieurement dans une phase opérationnelle (mise à jour on-line) lorsque l'UE transmet effectivement des requêtes d'association aux stations de base du réseau.

La Fig. 2 représente un ordinogramme d'une méthode d'association utilisant une méthode d'apprentissage par renforcement selon un premier mode de réalisation de la présente invention.

La méthode d'association représentée concerne un équipement d'utilisateur (UE) $u_j$, jouant le rôle d'un agent dans une méthode d'apprentissage par renforcement MARL.

La méthode d'association comprend une phase d'initialisation et une phase opérationnelle. La phase d'initialisation comprend les étapes 210-220.

A l'étape, 210, l'équipement d'utilisateur $u_j$ détermine l'ensemble $S_j$ des stations de base auxquelles il est susceptible de s'associer, autrement dit l'ensemble des stations de base pour lesquelles il se trouve dans la zone de couverture. Cet ensemble peut par exemple être déterminé en comparant les niveaux respectifs de puissance des signaux reçus des différentes stations de base et en les comparant à une valeur de seuil prédéterminée :

$$S_j=\left\{BS_i \middle| RSSI_{ij}\geq RSSI_{th,j}\right\} \tag{7}$$

où $RSSI_{ij}$ représente le niveau de puissance du signal reçu par l'UE $u_j$ en provenance de la station de base $BS_i$ *et* $RSSI_{th,j}$ est un niveau de seuil. Ce niveau de seuil peut par exemple dépendre d'une qualité de service $QoS_j$ requise par l'utilisateur.

Selon une première variante, l'ensemble $S_j$ est déterminé à partir de la position de l'utilisateur et des stations de bases avoisinantes :

$$S_j=\left\{BS_i \middle| d_{ij}\leq CR_i\right\} \tag{8}$$

où $d_{ij}$ est la distance de l'équipement d'utilisateur $u_j$ à la station de base $BS_i$.

Selon une seconde variante, l'ensemble $S_j$ peut être directement fourni sous la forme d'une liste de stations de base transmise à $u_j$ (dans le cas d'un réseau 5G, cette liste peut être transmise par la station de base de la macro-cellule).

A l'étape 220, l'UE $u_j$ apprend une stratégie $\pi_j$. Pour ce faire, il enregistre dans sa mémoire $M_j$ les expériences d'une pluralité d'épisodes puis détermine une stratégie optimale sur la base des expériences enregistrées. Les expériences $e_j(t)$ peuvent être simulées auquel cas l'UE disposera d'une stratégie (pré-stockée en mémoire ou téléchargée auprès d'un serveur lors de l'admission dans le réseau), autrement dit d'une fonction $\pi_j^0$ associant à tout état $s_j(t)$ (ou à toute observation $\mathbf{o}_j(t)$ de cet état) une action $a_j(t)$ . La manière dont la stratégie $\pi_j$ est obtenue à partir des expériences $e_j(t)$ est détaillée plus loin.

La phase d'initialisation est suivie d'une phase opérationnelle représentée par une boucle itérative, une itération étant effectuée à chaque instant discret $t$.

A chaque instant $t$, l'agent relatif à l'UE $u_j$ prend en compte une observation $\mathbf{o}_j(t)$ de son environnement $s_j(t)$ pour décider d'une action $a_j(t)$.

L'agent obtient une observation $\mathbf{o}_j(t)$ de son environnement à l'étape 230.

Cette observation comprend la requête d'association transmise par l'UE à l'instant précédent (et par conséquent l'identifiant de la station de base à laquelle elle a été envoyée) ainsi que la réponse de la station de base. Ainsi, l'UE sait si sa requête d'association a été accordée par la station de base en question.

L'observation comprend en outre le débit de données observé par l'utilisateur sur la liaison descendante, ainsi que la valeur de la fonction d'utilité sur l'ensemble du réseau, calculée par un contrôleur central, hébergé par exemple par la station de base de la macrocellule (MBS) ou par un serveur. Le résultat du calcul est diffusé à tous les utilisateurs. Le contrôleur pourra être par exemple réalisé par une application logicielle dédiée, un processeur ou un DSP.

L'observation peut également comprendre une mesure $RSSI_j(t)$ de la puissance du signal reçu par la station de base courante à laquelle l'UE $u_j$ est associé, ainsi que le débit de données requis, $D_j(t)$.

La mesure de puissance $RSSI_j(t)$ permet de calculer également le rapport $SNR_{ij}(t)$ pour l'itération suivante.

A partir de l'observation $\mathbf{o}_j(t)$, l'agent de l'UE $u_j$ détermine en 240 l'action optimale au sens de la stratégie $\pi_j$. Cette stratégie a pour objet de maximiser l'espérance mathématique de la somme des récompenses futures, pondérées par leurs facteurs d'actualisation respectifs :

$$a_j(t) = \arg\max_{a,\pi_j} E\left(G_j(t)\right) \tag{9}$$

En pratique, la stratégie utilisée $\pi_j$ pourra être une stratégie gloutonne ou $\varepsilon$ - gloutonne basée sur les valeurs d'action comme décrit plus loin.

A partir de l'action retenue $a_j(t)$ , l'UE déduit la station de base $BS_i \in S_j$ à laquelle souhaite s'associer. L'identifiant de la station de base en question est transmis en 250 au contrôleur central, par exemple à la station MBS dans le cas d'un réseau 5G. On pourra en outre prévoir que dans le cas où aucune des stations de base $BS_i$ de $S_j$ n'est retenue, l'utilisateur requière une association à la station de base MBS. Le contrôleur relaie ensuite la requête d'association à la station de base $BS_i$ concernée.

En 260, la station de base $BS_i$ détermine si elle dispose de ressources de transmission suffisantes pour servir tous les utilisateurs ayant requis une association avec elle. Elle en avertit le contrôleur au moyen de la réponse $ACK_j(t)$.

Si la réponse est négative ($ACK_j(t) = 0$) pour l'une des stations de base, une collision est détectée en 265. En outre, dans le cas d'un réseau 5G, la station de base MBS accorde alors l'association à l'équipement d'utilisateur $u_j$. Autrement dit, l'association à la station de base MBS constitue une solution de repli en cas de refus de la station de base $BS_i$.

Dans tous les cas, le contrôleur ou bien la station de base $BS_i$ elle-même avertit l'équipement d'utilisateur $u_j$ de l'association ou non en 270 par la réponse $ACK_j(t)$

En 280, le contrôleur calcule la capacité totale R(t) à partir des capacités $R_j(t)$, $j = 1,..,N_u$, de l'ensemble des liaisons descendantes. La valeur de la fonction d'utilité $U(t)$ est également calculée, le cas échéant en prenant en compte les des débits de données $D_j(t)$ , $j = 1,..,N_u$, requis par les différents utilisateurs et préalablement transmis par ceux-ci au contrôleur.

Le contrôleur diffuse ensuite la capacité totale $R(t)$ ainsi qu'une récompense commune $r(t)$ pour tous les agents. Celle-ci est nulle si une collision est détectée et égale à la valeur de la fonction d'utilité $U(t)$ sinon.

On retourne ensuite à l'acquisition d'un nouveau vecteur d'observation en 290.

La Fig. 3 représente de manière schématique les échanges de messages entre différents éléments d'un réseau hétérogène, plus particulièrement d'un réseau 5G, lors de la mise en œuvre de la méthode d'association selon la Fig. 2.

On a représenté sur la figure l'équipement d'utilisateur (UE), $u_j$, le contrôleur central par exemple ici la station de base de la macro-cellule dont où se trouve l'utilisateur, *MBS,* et la station de base de la petite cellule, $BS_i$, à laquelle l'équipement d'utilisateur $u_j$ demande une association. La station de base $BS_i$ fait partie de l'ensemble $S_j$ des stations de base avoisinantes.

A l'étape 310, l'équipement d'utilisateur $u_j$ transmet à la station de base *MBS,* l'action $a_j(t)$ , autrement dit l'identifiant de la station de base à laquelle cet équipement a décidé de demander une association.

Si $a_j(t) = 0$, la station de base *MBS* lui accorde automatiquement l'association en 320 et la liaison descendante

avec $u_j$ est établie.

Si $a_j(t) > 0$, la station de base *MBS* transfère en 330 la requête d'association à la station de base $BS_i$ correspondant à l'identifiant.

La station de base $BS_{a(j)}$ retourne la réponse $ACK_j(t)$ *à* la station de base *MBS* en 340.

Si $ACK_j(t) = 0$, la station de base *MBS* accorde l'association et établit une liaison descendante avec $u_j$ en 350.

En revanche, si $ACK_j(t) = 1$, la station de base $BS_{a(j)}$ accorde l'association et établit une liaison descendante avec $u_j$ en 355.

L'équipement d'utilisateur $u_j$ détermine le débit $D_j(t)$, requis par la qualité de service, et mesure la capacité $R_j(t) = B_{a(j),j}\log_2(1+SINR_{a(i),j})$de la liaison descendante précédemment établie avec $BS_{a(j)}$. Le rapport signal sur bruit et interférence, $\text{SINR}_{a(i),j}$ sur cette liaison peut être estimée sur la base de symboles pilote par exemple. Le débit requis $D_j(t)$ et la capacité $R_j(t)$ sont transmis à la station de base *MBS* en 360.

Selon une variante, ces informations sont agrégées au niveau de la station de base $BS_{a(j)}$ puis transmises à la station de base *MBS*. En particulier, la station de base $BS_{a(j)}$ peut fournir la somme des capacités au niveau de sa petite cellule et la transmettre à la station de base *MBS.*

La station de base *MBS* calcule la capacité globale *R(t)* à partir des capacités $R_j(t)$, $j = 1,...,N_u$ relatives aux différentes liaisons descendantes (ou des capacités agrégées au niveau des stations de base selon la variante ci-dessus) ainsi que la récompense *r(t).*

Elle diffuse ensuite ces informations à l'ensemble des équipements d'utilisateur, notamment à l'UE $u_j$ en 370.

Dans la suite, nous noterons pour des raisons d'homogénéité de notation, $r_j(t)$, la récompense commune reçue par l'UE $u_j$.

Nous avons précédemment vu que l'agent associé à un UE $u_j$ déterminait à chaque instant *t* son action $a_j(t)$ (autrement dit la station de base avec laquelle l'UE souhaitait s'associer) à partir de l'observation $\mathbf{o}_j(t)$ et de la stratégie $\pi_j$, l'observation $\mathbf{o}_j(t)$ traduisant la connaissance de l'état de l'environnement de l'agent associé à l'UE $u_j$. Plusieurs méthodes d'apprentissage par renforcement existent dans la littérature, telles que la méthode SARSA ou de la méthode dite de Q-learning. On pourra trouver une description des méthodes d'apprentissage par renforcement SARSA et Q-learning dans l'ouvrage de Richard S. Sutton et Andrew G. Barto intitulé « Reinforcement learning » , 2nd edition, 2018, pp. 129-132.

Selon les méthodes d'apprentissage SARSA et Q-learning, la stratégie $\pi_j$ de l'UE $u_j$ est obtenue par une mise à jour itérative sur les différents épisodes, à partir d'une fonction d'évaluation d'action (*state-action-value function*) $Q(s, a)$ entraînée sur chaque épisode, soit pour la méthode d'apprentissage SARSA :

$$Q(s,a) \leftarrow (1-\alpha)Q(s,a) + \alpha\left(r + \gamma Q(s',a')\right) \qquad (10\text{-}1)$$

et, pour la méthode d'apprentissage Q-learning :

$$Q(s,a) \leftarrow (1-\alpha)Q(s,a) + \alpha\left(r + \gamma \max_{a'} Q(s',a')\right) \qquad (10\text{-}2)$$

où $0 < \alpha \leq 1$ est le taux d'apprentissage (*learning rate*) et $0 < \gamma \leq 1$ est le facteur d'actualisation. *s* et *s'* représentent respectivement l'état courant et futur de l'environnement, *a* et *a'* représentent respectivement l'action de l'agent sur l'environnement dans l'état *s* et *s'*, et *r* est la récompense obtenue de l'environnement après avoir effectué l'action *a* dans l'état *s* . La mise à jour est effectuée en sélectionnant pour chaque état *s* une action *a* selon, par exemple, une stratégie de type $\varepsilon$ -gloutonne (ε-greedy en anglais) basée sur les valeurs $Q(s, a)$ enregistrées, puis en mettant à jour ces valeurs à partir de la récompense obtenue et de la valeur de la fonction d'évaluation d'action dans l'état suivant *s'*, soit selon la stratégie courante (pour méthode d'apprentissage SARSA), soit selon le maximum de la fonction de d'évaluation à l'état suivant

Les algorithmes tels que Q-Learning et SARSA connus de l'état de la technique peuvent par conséquent s'appliquer pour estimer $Q(\mathbf{o}_j(t),a_j(t))$.

Dans le cas présent, à cause de la complexité du système 5G, la fonction d'évaluation d'action selon la méthode d'apprentissage Q-learning est approximée par un réseau de neurones artificiels récurrent, encore dénommé DRQN (*Deep Recurrent Q Network*), représenté en Fig. 4.

Ce réseau DRQN comporte une couche d'entrée recevant à l'instant *t* le vecteur d'observation $\mathbf{o}_j(t)$, autrement dit la requête émise à l'instant précédent, $a_j(t-1)$, la réponse à cette requête $ACK_j(t-1)$ reçue de la station de base $BS_{a(j)}$, la capacité de la liaison descendante $R_j(t-1)$ de cette station de base ainsi que la capacité totale du réseau calculée sur l'ensemble des liaisons descendantes des utilisateurs, *R(t-1)* . Optionnellement, la couche d'entrée recevra en outre la mesure du niveau de puissance du signal reçu de la station de base $BS_{a(j)}$, ainsi que le débit de données requis par l'équipement d'utilisateur $u_j$.

La couche d'entrée est suivie d'une première pluralité de couches cachées densément connectées ou MLP (Multilayer Perceptron).

La couche de sortie fournit un vecteur de taille $J = Card(S_j)$ donnant pour chaque station de base $BS_i \in S_j$ une valeur de la fonction d'action correspondant au choix de cette station de base pour l'association. En pratique, le nombre de neurones de la couche de sortie est limitée à une valeur $J_{max}$ prédéterminée, paramètre du réseau correspondant au plus grand nombre de cellules du réseau dont l'utilisateur peut recevoir les signaux pilotes au même temps. La couche de sortie est précédée d'une seconde pluralité de couches cachées densément connectées (ou MLP).

Les neurones des premier et second perceptrons pourront utiliser une fonction d'activation de type rectification linéaire (ReLU) de manière connue en soi.

Entre le premier et le second perceptron est intercalée une couche de réseau de neurones récurrent (RNN), par exemple un réseau de type LSTM *(Long Short-Term Memory)* connu de l'état de la technique. Un tel réseau de neurones LSTM présente la particularité de ne pas être classiquement à propagation avant (*feed forward*) mais de présenter des connexions de contre-réaction lui permettant d'apprendre sur des séquences ainsi que des portes d'oubli (*forget gate*) permettant de préciser l'horizon temporel de l'apprentissage.

Une fois entraîné (par exemple par simulation ou *off-line*), le réseau de neurones fournit, à partir du vecteur d'observation $\mathbf{o}_j(t)$, une estimation de la valeur d'action $Q(\mathbf{o}_j(t),a)$ pour chaque action $a$ possible (autrement dit pour chaque station de base $BS_i \in S_j$ avec laquelle l'équipement d'utilisateur $u_j$ est susceptible de s'associer).

En fait, le réseau récurrent comprend un registre interne permettant la contre-réaction. On peut le considérer comme une machine d'états, l'état (caché) de la machine à l'instant $t$ étant représenté par le contenu de ce registre, noté $\mathbf{h}_j(t)$, vecteur de dimension égale à la taille du registre. En outre, on supposera que les coefficients synaptiques du réseau de neurones sont représentés de manière synthétique sous une forme vectorielle, $\theta_j$. Nous adopterons par conséquent dans la suite la notation $Q(\mathbf{o}_j(t),a,\mathbf{h}_j(t-1)|\theta_j)$ pour exprimer cette dépendance de l'estimation, le vecteur $\mathbf{h}_j(t-1)$ exprimant le fait que c'est le contenu du registre à l'instant précédent qui intervient dans le calcul de la valeur d'action à l'instant courant.

Le réseau de neurones DRQN est entraîné de manière supervisée sur des épisodes c'est-à-dire sur des séquences d'expériences $e_j(t)$ , $t = 1,...,T$, stockées dans une mémoire locale $M_j$ (ou replay buffer) de l'UE $u_j$.

L'entraînement vise à rechercher le jeu de paramètres $\theta_j$ minimisant l'espérance de la fonction de perte (*loss function*) sur l'ensemble $M_j$ des expériences :

$$L_j\left(\boldsymbol{\theta}_j\right) = E_{e_j(t)\sim M_j}\left(\left[y_j(t) - Q\left(\mathbf{o}_j(t), a_j(t), \mathbf{h}_j(t-1)\middle|\boldsymbol{\theta}_j\right)\right]^2\right) \qquad (11)$$

**où** $E_{e_j(t)\sim M_j}$ signifie que l'espérance mathématique est prise sur l'ensemble $M_j$, et où $\mathbf{o}_j(t), a_j(t)$ sont issues de l'expérience $e_j(t)$, $1 \le t < T$ et où :

$$y_j(t) = r_j(t) + \gamma \max_{a'} Q\left(\mathbf{o}_j(t+1), a', \mathbf{h}_j(t)\middle|\hat{\boldsymbol{\theta}}_j\right) \qquad (12)$$

où $y_j(t)$ représente l'objectif de la valeur d'action à atteindre par le réseau de neurones, et $\hat{\theta}_j$ représente le jeu de paramètres dernièrement estimés au moyen de l'algorithme de gradient stochastique (SGD).

Cet objectif de valeur d'action à atteindre n'est autre que la somme la plus élevée des récompenses actualisées que peut recevoir l'agent, compte tenu de l'observation $\mathbf{o}_j(t)$ et de l'action $a_j(t)$ tirée de l'expérience $e_j(t)$. On comprend en effet de l'équation (12) que cette valeur est la somme de la récompense $r_j(t)$ faisant suite à l'action $a_j(t)$ et de la valeur d'action maximale calculée à l'instant suivant affectée du coefficient d'actualisation $\gamma$ (c'est-à-dire du maximum des récompenses futures actualisées à l'instant suivant).

En règle générale, le calcul du gradient de la fonction de perte n'est pas effectué sur l'ensemble $M_j$ des expériences (l'ensemble d'apprentissage) mais sur un mini-lot $B_j \subset M_j$ de telles expériences, notées pour cette raison $e_j^b(t)$.

La fonction de perte :

$$L_j\left(\boldsymbol{\theta}_j\right) = E_{e_j^b(t)\sim B_j}\left(\left[y_j^b(t) - Q\left(\mathbf{o}_j^b(t), a_j^b(t), \mathbf{h}_j^b(t-1)\middle|\boldsymbol{\theta}_j\right)\right]^2\right) \qquad (13)$$

est alors minimisée sur le mini-lot où $E_{e_j^b(t)\sim B_j}[.]$ signifie que l'espérance mathématique est prise sur l'ensemble des expériences du mini-lot $B_j$. Les valeurs avec $b$ en indice suscrit sont relatives au mini-lot et non à l'ensemble $M_j$ tout entier. En particulier :

$$y_j^b(t) = r_j^b(t) + \gamma \max_{a'} Q\left(\mathbf{o}_j^b(t+1), a', \mathbf{h}_j^b(t) \middle| \hat{\boldsymbol{\theta}}_j\right) \quad (14)$$

On remarquera que l'expression entre crochets dans l'expression (11) ou (13) est connue comme l'erreur TD de la fonction d'évaluation de valeur d'action, notée respectivement $\theta_j$ et $\delta_j^b$. Les expressions (11) et (13) des fonctions de perte deviennent alors :

$$L_j(\boldsymbol{\theta}_j) = E_{e_j(t)\sim M_j}\left(\left[\delta_j(t)\right]^2\right) \quad (15\text{-}1)$$

et, dans le cas d'un traitement par mini-lot :

$$L_j(\boldsymbol{\theta}_j) = E_{e_j^b(t)\sim B_j}\left(\left[\delta_j^b(t)\right]^2\right) \quad (15\text{-}2)$$

Dans le cas d'un apprentissage distribué et collaboratif (par exemple MARL), la stabilité de l'apprentissage peut être améliorée en privilégiant l'apprentissage sur les erreurs TD positives, c'est-à-dire celles conduisant à un accroissement de la valeur d'action. Pour ce faire, on introduit une hystérésis dans l'apprentissage en dissymétrisant les fonctions de perte :

$$L_j(\boldsymbol{\theta}_j) = E_{e_j(t)\sim M_j}\left(\left[w_j.\delta_j(t)\right]^2\right) \quad (16\text{-}1)$$

$$L_j(\boldsymbol{\theta}_j) = E_{e_j^b(t)\sim B_j}\left(\left[w_j^b.\delta_j^b(t)\right]^2\right) \quad (16\text{-}2)$$

avec $w_j = \chi$ (resp. $w_j^b = \chi$) si $\delta j(t) \geq 0$ (resp. $\delta_j^b(t) \geq 0$) et $w_j = \beta$ (resp. $w_j^b = \beta$) dans le cas contraire, avec $0 < \beta \ll \chi \leq 1$ . Autrement dit, si l'erreur TD est positive, le taux d'apprentissage est de $\chi$ et si l'erreur TD est négative, le taux d'apprentissage est de $\beta$.

L'apprentissage peut être encore amélioré en termes de stabilité du jeu de paramètres, en utilisant deux réseaux de neurones, un premier réseau DRQN pour l'optimisation du jeu de paramètres et un second réseau DRQN, dit réseau d'objectif (*target network*), de même structure que le premier, pour le calcul de l'objectif de la valeur d'action $y_j^b(t)$, comme proposé dans l'article de V. Mnih et al. intitulé « Human-level control through deep reinforcement learning », 26.2.2015, vol. 158, pp. 529-541 et illustré en Fig. 5.

La Fig. 5 représente un ordinogramme d'une méthode d'apprentissage du réseau de neurones de la Fig. 4.

Nous noterons dans la suite $DRQN_j$ le réseau de neurones dédié à l'optimisation du jeu de paramètres et $\widehat{DRQN}_j$ celui en charge du calcul de l'objectif de la valeur d'action pour l'UE $u_j$. De la même façon, les grandeurs relatives au réseau $\widehat{DRQN}_j$ porteront un accent circonflexe. Les réseaux $DRQN_j$ et $\widehat{DRQN}_j$ ont des structures identiques et ne diffèrent que par leurs jeux de paramètres respectifs.

A l'étape 510, on initialise la mémoire $M_j$ (replay buffer) au moyen des expériences $e_j(t)$ appartenant à une pluralité d'épisodes. On initialise également les jeux de paramètres $\theta_j$ et $\hat{\theta}j$ respectifs des réseaux $DRQN_j$ et $\widehat{DRQN}_j$ ainsi que les valeurs d'actions $Q(\mathbf{o}_j(t),a,\mathbf{h}_j(t\text{-}1)|\theta_j)$ et $Q(\mathbf{o}_j(t),a,\mathbf{h}_j(t\text{-}1)|\hat{\theta}_j)$. On extrait ensuite un premier mini-lot de la mémoire $M_j$.

Pour accélérer la convergence de l'apprentissage, les jeux initiaux de paramètres et/ou les valeurs d'actions initiales peuvent avoir été obtenus par simulation et préchargés dans la mémoire de l'équipement d'utilisateur ou bien encore avoir téléchargés auprès d'un serveur du réseau lors de l'admission de l'utilisateur dans le réseau.

On entre ensuite en 520 dans une boucle itérative sur les expériences $e_j^b(t)$ du mini-lot, chaque itération correspondant à une telle expérience.

A l'étape 530, on choisit une action *a*, par exemple à travers une stratégie de type $\varepsilon$ -gloutonne, c'est-à-dire de manière aléatoire avec une probabilité $\varepsilon$ et sinon l'action $\arg\max_a Q\left(\mathbf{o}_j(t), a, \mathbf{h}_j(t-1)\middle|\boldsymbol{\theta}_j\right)$ avec une probabilité 1 -$\varepsilon$.

A l'étape 540, on recherche la récompense $r_j^b(t)$ et l'observation suivante $\mathbf{o}_j^b(t+1)$ dans l'enregistrement $e_j^b(t) = \left(\mathbf{o}_j^b(t), a, r_j^b(t), \mathbf{o}_j^b(t+1)\right)$.

A l'étape 550, on calcule l'objectif de la valeur d'action à atteindre par l'expression (17), soit $y_j^b(t) = r_j^b(t) + \gamma \max_{a'} Q\left(\mathbf{o}_j^b(t+1), a', \mathbf{h}_j^b(t)\middle|\hat{\boldsymbol{\theta}}_j\right)$.

A l'étape 560, après traitement de l'ensemble des expériences du mini-lot, on calcule la fonction de perte (17-1) ou (18-2) du réseau $DRQN_j$, *à* partir des différences quadratiques ($\left(y_j^b(t) - Q\left(\mathbf{o}_j^b(t), a_j^b(t), \mathbf{h}_j^b(t-1)\middle|\boldsymbol{\theta}_j\right)\right)^2$)relatives aux différentes expériences du mini-lot.

En 570, on effectue une descente de gradient stochastique par rapport aux paramètres $\theta_j$ sur les expériences du mini-lot et l'on déduit le nouveau jeu de paramètres $\hat{\theta}_j$.

En 580, on charge le nouveau jeu de paramètres $\hat{\theta}_i$ dans le réseau $\widehat{DRQN}_j$.

Enfin en 590, on extrait un nouveau mini-lot de la mémoire $M_j$ et on retourne à l'étape 520.

A la fin de la méthode d'apprentissage (sur satisfaction d'un critère d'arrêt, par exemple en fonction du valeur de la fonction de perte) on dispose d'un jeu de paramètres optimal, $\boldsymbol{\theta}_j^*$ pour estimer les valeurs d'action.

Une fois le réseau DRQN entraîné, la sélection de la station de base $BS_i$ pour requérir l'association est ensuite obtenue dans la phase opérationnelle à partir des J sorties de ce réseau au moyen de l'un stratégie gloutonne $\pi_j$ définie par :

$$a_j(t) = \arg\max_a \left(Q\left(\mathbf{o}_j(t), a, \mathbf{h}_j(t-1)\middle|\boldsymbol{\theta}_j^*\right)\right) \qquad (17)$$

où $\mathbf{o}_j(t)$ et $\mathbf{h}_j(t)$ représentent ici l'observation et l'état caché du réseau DRQN à l'instant *t* de la phase opérationnelle. Dans l'expression (19), on comprendra que l'argument du maximum est recherché parmi toutes les actions possibles, en l'occurrence toutes les requêtes d'association à des stations de base $BS_i \in S_j$. Cela correspond à chercher, parmi toutes les sorties du réseau de neurones, celle qui corresponde au valeur le plus élevé.

Alternativement, la stratégie $\pi_j$ pourra être $\varepsilon$ -gloutonne, auquel cas l'action optimale sera fournie par (19) avec une probabilité 1 - $\varepsilon$ et choisie au hasard parmi les autres actions possibles avec une probabilité $\varepsilon$.

La probabilité $\varepsilon$ pourra être choisie relativement proche de 1 au départ puis décroître vers une valeur faible de manière à ce que la stratégie soit à terme quasi-déterministe pour un environnement donné.

La méthode d'apprentissage peut être effectuée *off-line* et, le cas échéant être complétée *on-line* en continuant à stocker des expériences $e_j(t)$ pendant la phase opérationnelle pour prendre en compte des variations de l'environnement.

En variante à la méthode d'apprentissage exposée ci-dessus, on peut prévoir à l'étape 580 que le nouveau jeu de paramètres ne sera chargé que toutes les *K* itérations, autrement dit toutes les K expériences.

La méthode d'association décrite ci-dessus en relation avec la Fig. 2, en particulier lorsque la valeur d'action est estimée à l'aide d'un réseau DRQN tel que celui de la Fig. 4, permet d'obtenir une bonne flexibilité lorsque le réseau évolue dans le temps, par exemple lorsque de nouveaux utilisateurs sont admis ou quittent le réseau ou encore lorsque leurs demandes en termes de qualité de service varient. Cette flexibilité est obtenue lorsque l'apprentissage du réseau DRQN est effectuée on-line, les coefficients synaptiques ainsi que les états cachés des réseaux $DRQN_j$, $j = 1,...,N_u$ évoluant alors dans le temps.

Toutefois, cette flexibilité peut être encore améliorée en adoptant une méthode d'association selon un second mode de réalisation de l'invention.

On suppose dans ce mode de réalisation que le réseau être confronté à N tâches différentes. Une tâche pourra correspondre à un $N_u$-uplet de services pour les différents utilisateurs. Par exemple, dans un réseau 5G, le service requis par utilisateur à un instant donné pourra être du type xMBB, URLLC ou mMTC. Un service requis par un utilisateur est défini par un ensemble de contraintes de qualité de service portant par exemple sur le débit ou la latence sur la liaison avec le réseau. Les services requis par un utilisateur pourront notamment varier selon le temps et sa localisation.

On notera $T^{(n)}=\left\{T_1^{(n)},T_2^{(n)},...,T_{N_u}^{(n)}\right\}$ une tâche du réseau où $T_j^{(n)}$ représente un service requis par l'utilisateur j dans cette tâche et $T = \{T^{(1)},T^{(2)},..,T^{(N)}\}$ l'ensemble des tâches que le réseau peut avoir à effectuer. Par exemple $T_j^{(n)}$ peut être le débit moyen requis par l'UE $u_j$ dans la tâche $n$ ou encore le couple constitué par débit moyen requis et la position de l'utilisateur dans cette tâche.

Chaque tâche du réseau constitue une classe d'environnement pour les différents utilisateurs. Du point de vue d'un équipement d'utilisateur $u_j$, chaque tâche se traduit par une zone différente $\boldsymbol{\Theta}_j^{(n)}$ de l'espace des paramètres de son réseau DRQN. L'environnement de l'utilisateur est supposé stationnaire pour une tâche donnée.

Le second mode de réalisation fait à appel à une distillation de stratégie comme décrit dans l'article de A.A. Rusu et al. intitulé « Policy distillation » publié sous arXiv:1511.06295v2, 7 jan. 2016.

Plus précisément, la Fig. 6 représente un ordinogramme d'une méthode d'association utilisant une méthode d'apprentissage par renforcement selon un second mode de réalisation de la présente invention.

Comme dans le premier mode de réalisation, la méthode d'association est exécutée de manière indépendante par chaque utilisateur, ici l'UE $u_j$.

Seule la partie d'apprentissage a été représentée sur la figure, étant bien entendu que la phase opérationnelle utilise le réseau de neurones DRQN entraîné pour déterminer la station de base à laquelle l'UE requerra l'association, comme décrit en relation avec la Fig. 2.

La partie d'apprentissage comprend deux phases, correspondant respectivement à la partie droite et à la partie gauche de la figure.

Dans la première phase, des réseaux de neurones $DRQN_j^{(n)}$, $n = 1,..,N$, dits réseaux de neurones maîtres, de même structure que décrite en relation avec la Fig. 4, sont respectivement entrainés sur les tâches $T^{(n)}$, $n = 1,.., N$. Cet entrainement sur les différentes tâches peut être effectué de manière parallèle ou séquentielle. Dans le cas illustré, l'entraînement est réalisé séquentiellement au moyen d'une boucle itérative, chaque itération correspondant à une nouvelle tâche $T^{(n)}$ de $T$.

Pour chaque nouvelle tâche $T^{(n)}$ prise en compte à l'étape 610, le réseau de neurones maîtres $DRQN_j^{(n)}$ est entrainé en 620 à partir des expériences $e_j(t) = (\mathbf{o}_j(t),a_j(t),r_j(t),\mathbf{o}_j(t+1))$ réalisées dans le cadre de cette tâche, ces expériences étant lues d'une mémoire $MM_j^{(n)}$ où elles ont été préalablement stockées. L'entraînement du réseau est réalisé comme décrit en relation avec la Fig. 5, autrement dit, le réseau de neurones $DRQN_j^{(n)}$ est entrainé de manière supervisée pour estimer les valeurs d'action $Q(\mathbf{o}_j(t),a_j(t))$, le résultat de l'entraînement étant matérialisé par un jeu optimal de paramètres $\boldsymbol{\theta}_j^{(n)*}$.

A l'étape 630, le réseau de neurones $DRQN_j^{(n)}$ estime les valeurs d'action pour les observations des expériences stockées dans la mémoire $MM_j^{(n)}$. Plus précisément, ces estimations, $Q\left(\mathbf{o}_j(t),a,\mathbf{h}_j(t-1)\middle|\boldsymbol{\theta}_j^{(n)*}\right)$, sont réalisées pour toutes actions $a$ possibles, c'est-à-dire pour toutes les stations de base $BS_i \in S_j$ auprès desquelles une association peut être demandée dans le cadre de cette tâche. Elles seront pour cette raison notées sous d'un vecteur de taille $J_{\max}$, $\mathbf{Q}_j\left(\mathbf{o}_j(t)\middle|\boldsymbol{\theta}_j^{(n)*}\right)$. Ces estimations sont stockées en relation avec les vecteurs d'observation $\mathbf{o}_j(t)$, dans une mémoire commune à l'ensemble des tâches, notée $SM_j$. Au terme de la séquence de tâches d'apprentissage, la mémoire $SM_j$ contient des couples ( $\mathbf{o}_j(t),\mathbf{Q}_j\left(\mathbf{o}_j(t)\middle|\boldsymbol{\theta}_j^{(n)*}\right)$ ) sans que la tâche d'apprentissage ne soit elle-même renseignée.

Dans la seconde phase, un réseau de neurones $DRQN_j^e$, dit réseau élève, présentant potentiellement une structure sensiblement plus simple que celle des réseaux maîtres, $DRQN_j^{(n)}$, au sens où il possède sensiblement moins de couches internes que ces derniers, est entraîné en 640 à partir des données d'apprentissage stockées dans la mémoire commune $SM_j$. Plus précisément, cet entraînement est réalisé de manière supervisée sur la base des données (

$\mathbf{o}_j(t), \mathbf{Q}_j\left(\mathbf{o}_j(t)\middle|\boldsymbol{\theta}_j^{(n)*}\right)$), $\mathbf{o}_j(t)$ étant vecteur d'entrée du réseau $DRQN_j^e$ et $\mathbf{Q}_j\left(\mathbf{o}_j(t)\middle|\boldsymbol{\theta}_{1,j}^*\right)$ l'étiquette associée. On comprend donc que le réseau de neurones $DRQN_j^e$ est entraîné sur des données préalablement distillées selon les différentes tâches par les réseaux de neurones maîtres.

Une fois entraîné, le réseau de neurones $DRQN_j^e$, peut prédire dans une phase opérationnelle, à partir d'un vecteur d'observation donné, les valeurs d'action relatives aux différentes actions possibles. Comme dans le premier mode de réalisation, on sélectionne ensuite l'action correspondant à la plus grande valeur d'action en sortie du réseau de neurones $DRQN_j^e$. Cette action fournit l'identifiant de la station de base $BS_i \in S_j$ auprès de laquelle l'UE $u_j$ requerra l'association.

## Revendications

1. Méthode d'association d'équipements d'utilisateurs à des stations de base d'un réseau cellulaire, ladite méthode d'association mettant en œuvre une méthode d'apprentissage par renforcement multi-agent, un agent étant associé à chaque équipement d'utilisateur, **caractérisée en ce que** :

   - chaque équipement d'utilisateur $u_j$ détermine un ensemble $S_j$ de stations de base dans la couverture de chacune desquelles il se trouve ;
   - chaque agent associé à un équipement d'utilisateur sélectionne à partir d'une observation partielle ($\mathbf{o}_j(t)$) de son environnement à un instant donné, une action ( $a_j(t)$ ) parmi une pluralité d'actions possibles, chaque action possible correspondant à une demande d'association de l'équipement d'utilisateur à une station de base ($BS_i \in S_j$) dudit ensemble, ladite action étant sélectionnée sur la base d'une stratégie ($\pi_j$) visant à maximiser une valeur d'action calculée comme l'espérance de la somme d'une pluralité de récompenses futures, actualisées audit instant donné , l'équipement d'utilisateur transmettant à un contrôleur central une demande d'association correspondant à l'action ainsi sélectionnée ;
   - chaque station de base détermine si elle peut satisfaire l'ensemble des requêtes d'association reçues des équipements d'utilisateurs compte tenu des ressources de transmission dont elle dispose et dans la négative en informe le contrôleur central;
   - le contrôleur central calcule une récompense ($r(t)$), commune aux actions des agents, et la diffuse à tous les équipements d'utilisateurs, cette récompense étant nulle si l'une des stations de base ne peut satisfaire l'ensemble des requêtes d'association reçues et égale à la valeur prise par une fonction d'utilité du réseau, représentative de la qualité de service offerte aux équipements d'utilisateurs, sinon.

2. Méthode d'association d'équipements d'utilisateurs à des stations de base d'un réseau cellulaire selon la revendication 1, **caractérisée en ce que** la fonction d'utilité $U(t)$ du réseau est égale à la somme des capacités des liaisons descendantes entre les équipements d'utilisateurs et les stations de base qui leur sont associées ou bien à la somme des logarithmes de ces capacités.

3. Méthode d'association d'équipements d'utilisateurs à des stations de base d'un réseau cellulaire selon la revendication 1, **caractérisée en ce que** la fonction d'utilité du réseau est égale à $U(t) = \sum_{i,j} x_{ij} \min\left(D_j, R_{ij}\right)$ où $D_j$ est le débit requis par un équipement d'utilisateur $u_j$ et $R_{ij}$ est la capacité de la liaison descendante entre la station de base $BS_i$ et l' équipement d'utilisateur $u_j$, $x_{ij} = 1$ si la station de base $BS_i$ est associée à l'équipement d'utilisateur $u_j$ et $x = 1$ sinon.

4. Méthode d'association d'équipements d'utilisateurs à des stations de base d'un réseau cellulaire selon l'une des revendications précédentes, **caractérisée en ce que** le réseau cellulaire est un réseau hétérogène constitué d'une couche de macro-cellules et d'une couche de petites cellules, et que le contrôleur central est situé dans la station de base d'une macro-cellule.

5. Méthode d'association d'équipements d'utilisateurs à des stations de base d'un réseau cellulaire selon la revendication 1, **caractérisée en ce que** l'agent associé à un équipement d'utilisateur $u_j$ prédit les valeurs d'action des différentes actions possibles au moyen d'un réseau de neurones artificiels récurrent (DRQN) recevant en entrée un vecteur d'observation de l'environnement $\mathbf{o}_j(t)$ à un instant donné et fournissant en sortie une prédiction des valeurs d'action pour les différentes actions possibles correspondant aux stations de base de l'ensemble $S_j$.

**6.** Méthode d'association d'équipements d'utilisateurs à des stations de base d'un réseau cellulaire selon la revendication 5, **caractérisée en ce que** le réseau de neurones comprend une couche d'entrée, une première pluralité de couches densément connectées, une couche LSTM, une seconde pluralité de couches densément connectées et une couche de sortie.

**7.** Méthode d'association d'équipements d'utilisateurs à des stations de base d'un réseau cellulaire selon la revendication 5 ou 6, **caractérisée en ce que** le vecteur d'observation de l'environnement comprend l'action $a_j(t\text{-}1)$ ayant été effectuée par l'équipement d'utilisateur $u_j$ à l'instant précédent ; la réponse $ACK_j(t\text{-}1)$ à la requête d'association, renvoyée par la station de base à laquelle elle a été transmise ; une mesure de la puissance reçue de la station de base à l'instant donné $t$, $RSSI_j(t)$ ; le débit $D_j(t)$ requis par le terminal mobile à l'instant t, une estimation $R_j(t\text{-}1)$ de la capacité de canal de la liaison descendante à l'instant précédent t-1 ; une estimation R(t-1) de la somme des capacités des liaisons descendantes des équipements d'utilisateurs à l'instant précédent.

**8.** Méthode d'association d'équipements d'utilisateurs à des stations de base d'un réseau cellulaire selon l'une des revendications 5 à 7, **caractérisée en ce que** le réseau de neurones récurrents est entrainé sur un ensemble d'expériences $e_j(t)=(\mathbf{o}_j(t),a_j(t),r_j(t),\mathbf{o}_j(t+1))$, chaque expérience appartenant à un épisode, $\{e_j(t);t=1,..,T\}$, une expérience étant définie comme un quadruplet constitué du vecteur d'observation $\mathbf{o}_j(t)$ au temps $t$ donné, de l'action $a_j(t)$ sélectionnée par l'agent à cet instant, de la récompense reçue du contrôleur suite à cette action, et d'un vecteur d'observation, $\mathbf{o}_j(t+1)$, à l'instant suivant, lesdites expériences étant stockées dans une mémoire locale $M_j$ de l'équipement d'utilisateur $u_j$.

**9.** Méthode d'association d'équipements d'utilisateurs à des stations de base d'un réseau cellulaire selon l'une des revendications 5 à 8, **caractérisée en ce que** les coefficients synaptiques du réseau de neurones récurrent sont représentés par un vecteur de paramètres, $\theta_j$, ledit vecteur de paramètres étant obtenu par une descente de gradient stochastique sur une fonction de perte moyennée par mini-lot $L_j\left(\boldsymbol{\theta}_j\right)=E_{e_j^b(t)\sim B_j}\left(\left[\delta_j^b(t)\right]^2\right)$ où $\delta_j^b(t)$ est une erreur TD de la prédiction de valeur d'action pour une expérience du mini-lot.

**10.** Méthode d'association d'équipements d'utilisateurs à des stations de base d'un réseau cellulaire selon l'une des revendications 5 à 8, **caractérisée en ce que** les coefficients synaptiques du réseau de neurones récurrent sont représentés par un vecteur de paramètres, $\theta_j$, ledit vecteur de paramètres étant obtenu par une descente de gradient stochastique sur une fonction de perte moyennée par mini-lot $L_j\left(\boldsymbol{\theta}_j\right)=E_{e_j^b(t)\sim B_j}\left(\left[w_j^b\delta_j^b(t)\right]^2\right)$ où $\delta_j^b(t)$ est une erreur TD de la prédiction de valeur d'action pour une expérience du mini-lot et $w_j^b=\chi$ si l'erreur TD est positive, $w_j^b=\beta$ dans le cas contraire, où $\beta$, $\chi$ sont des réels vérifiant $0<\beta\ll\chi\leq 1$.

**11.** Méthode d'association d'équipements d'utilisateurs à des stations de base d'un réseau cellulaire selon l'une des revendications 1 à 4, **caractérisée en ce que** le réseau cellulaire est confronté à une pluralité de tâches $T=\{T^{(1)}, T^{(2)},..,T^{(N)}\}$, chaque tâche étant définie par un ensemble de services requis par les différents équipements d'utilisateurs $T^{(n)}=\left\{T_1^{(n)},T_2^{(n)},...,T_{N_u}^{(n)}\right\}$ où $T_j^{(n)}$ représente un service requis par l'équipement d'utilisateur $u_j$ dans la tâche $T^{(n)}$, chaque tâche $T^{(n)}$ définissant une classe d'environnement pour l'ensemble des utilisateurs ; et que l'agent associé à un équipement d'utilisateur $u_j$ prédit les valeurs d'action des différentes actions possibles au moyen d'un réseau de neurones récurrent, dit réseau élève, ayant été entrainé pendant une période d'apprentissage sur les prédictions respectives d'une pluralité de réseaux de neurones récurrents, dits réseau maîtres, chaque réseau maître étant associé à une tâche du réseau et ayant été lui-même entraîné sur un ensemble d'expériences $e_j(t)=(\mathbf{o}_j(t),a_j(t),r(t),\mathbf{o}_j(t+1))$ réalisées dans le cadre de cette tâche, une expérience étant définie comme un quadruplet constitué du vecteur d'observation $\mathbf{o}_j(t)$ au temps $t$ donné, de l'action $a_j(t)$ sélectionnée par l'agent à cet instant, de la récompense reçue du contrôleur suite à cette action, et d'un vecteur d'observation, $\mathbf{o}_j(t+1)$, à l'instant suivant, les expériences réalisées dans le cadre d'une tâche $T^{(n)}$ étant stockées dans une mémoire locale $M_j^{(n)}$ de l'équipement d'utilisateur

$u_j$.

**12.** Méthode d'association d'équipements d'utilisateurs à des stations de base d'un réseau cellulaire selon la revendication 11, **caractérisée en ce qu'**au terme de l'entraînement de chaque réseau maître, celui-ci prédit les valeurs d'actions $\mathbf{Q}_j\left(\mathbf{o}_j(t)\middle|\boldsymbol{\theta}_j^{(n)*}\right)$ pour les vecteurs d'action issus des expériences réalisées dans le cadre de la tâche associée à ce réseau maître, lesdites prédictions de valeur d'action étant stockées avec les vecteurs d'observation correspondants, dans une mémoire commune à l'ensemble des tâches, notée $SM_j$, et qu'après que tous les réseaux maîtres ont été entraînés, le réseau élève est entrainé de manière supervisée sur les données d'entraînement ( $\mathbf{o}_j(t),\mathbf{Q}_j\left(\mathbf{o}_j(t)\middle|\boldsymbol{\theta}_j^{(n)*}\right)$ ), $\mathbf{o}_j(t)$ étant vecteur d'entrée du réseau élève et $\mathbf{Q}_j\left(\mathbf{o}_j(t)\middle|\boldsymbol{\theta}_{1,j}^{*}\right)$ étant l'étiquette associée.

## Patentansprüche

**1.** Zuordnungsverfahren von Benutzerausrüstungen zu Basisstationen eines Zellnetzes, wobei das genannte Zuordnungsverfahren ein Multi-Agent-Verstärkungslernverfahren umsetzt, wobei ein Agent mit jeder Benutzerausrüstung verbunden ist, **dadurch gekennzeichnet, dass**:

- jede Benutzerausrüstung $u_j$ einen Satz $S_j$ von Basisstationen in der Funkabdeckung jeder Ausrüstung bestimmt, in dem es sich befindet;
- jeder mit einer Benutzerausrüstung verbundene Agent aus einer Teilbeobachtung ($o_j(t)$) seiner Umgebung zu einem bestimmten Zeitpunkt eine Aktion ($a_j(t)$) aus einer Vielzahl möglicher Aktionen auswählt, wobei jede mögliche Aktion einer Anfrage zur Verbindung der Benutzerausrüstung mit einer Basisstation ($BS_i \in S_j$) der genannten Einheit entspricht, wobei die Aktion auf der Grundlage einer Strategie ($\pi_j$) ausgewählt wird, die darauf abzielt, einen Aktionswert zu maximieren, der als Hoffnung auf die Summe einer Vielzahl von zukünftigen Belohnungen berechnet wird, die zu einem bestimmten Zeitpunkt aktualisiert werden, wobei die Benutzerausrüstung eine Zuordnungsanfrage an einen zentralen Controller übermittelt, die der so ausgewählten Aktion entspricht;
- jede Basisstation bestimmt, ob sie alle Zuordnungsabfragen, die sie von den Benutzerausrüstungen erhält, unter Berücksichtigung der ihr zur Verfügung stehenden Übertragungsressourcen erfüllen kann, und teilt dies dem zentralen Controller andernfalls mit;
- der zentrale Controller eine Belohnung (r(t)) berechnet, die für die Aktionen der Agenten gleich ist, und verteilt sie an alle Benutzerausrüstungen, wobei diese Belohnung null ist, wenn eine der Basisstationen nicht alle empfangenen Zuordnungsabfragen erfüllen kann und dem Wert entspricht, der von einer Nutzfunktion des Netzes angenommen wird, die repräsentativ für die Servicequalität ist, die den Benutzerausrüstungen sonst geboten wird.

**2.** Zuordnungsverfahren von Benutzerausrüstungen zu Basisstationen eines Zellnetzes nach Anspruch 1, **dadurch gekennzeichnet, dass** die Nutzfunktion U(t) des Netzes gleich der Summe der Kapazitäten der Abwärtsverbindungen zwischen den Benutzerausrüstungen und den ihnen verbundenen Basisstationen oder der Summe der Logarithmen dieser Kapazitäten ist.

**3.** Zuordnungsverfahren von Benutzerausrüstungen zu Basisstationen eines Zellnetzes nach Anspruch 1, **dadurch gekennzeichnet, dass** die Nutzfunktion des Netzes $U(t)=\Sigma_{i,j}x_{ij}\min(D_j, R_{ij})$ entspricht, wobei $D_j$ die von einer Benutzerausrüstung $u_j$ benötigte Drehzahl und $R_{ij}$ die Kapazität der Abwärtsverbindung zwischen der Basisstation $BS_i$ und der Benutzerausrüstung $u_j$ ist, $x_{ij} = 1$, wenn die Basisstation $BS_i$ mit der Benutzerausrüstung $u_j$ verbunden ist, und $x_{ij} = 1$, wenn nicht.

**4.** Zuordnungsverfahren von Benutzerausrüstungen zu Basisstationen eines Zellnetzes nach einem der vorhergehenden Ansprüche, **dadurch gekennzeichnet, dass** das Zellnetz ein heterogenes Netz ist, das aus einer Makrozellenschicht und einer Schicht kleiner Zellen besteht, und dass sich der zentrale Controller in der Basisstation einer Makrozelle befindet.

**5.** Zuordnungsverfahren von Benutzerausrüstungen zu Basisstationen eines Zellnetzes nach Anspruch 1, **dadurch gekennzeichnet, dass** der mit einer Benutzerausrüstung verbundene Agent $u_j$ die Aktionswerte der verschiedenen möglichen Aktionen mittels eines wiederkehrenden künstlichen Neuronennetzes (DRQN) vorhersagt, das am Eingang einen Umgebungsbeobachtungsvektor $o_j(t)$ zu einem bestimmten Zeitpunkt erhält und als Ausgang eine Aktionswertvorhersage für die verschiedenen möglichen Aktionen liefert, die den Basisstationen des Satzes $S_j$ entsprechen.

**6.** Zuordnungsverfahren von Benutzerausrüstungen zu Basisstationen eines Zellnetzes nach Anspruch 5, **dadurch gekennzeichnet, dass** das Neuronennetz eine Eingangsschicht, eine erste Vielzahl dicht verbundener Schichten, eine LSTM-Schicht, eine zweite Vielzahl dicht verbundener Schichten und eine Ausgangsschicht umfasst.

**7.** Zuordnungsverfahren von Benutzerausrüstungen zu Basisstationen eines Zellnetzes nach Anspruch 5 oder 6, **dadurch gekennzeichnet, dass** der Umgebungsbeobachtungsvektor die Aktion $a_j$ $(t - 1)$ umfasst, die von der Benutzerausrüstung $u_j$ zu dem vorhergehenden Zeitpunkt durchgeführt wurde; die Antwort $ACK_j$ $(t - 1)$ auf die Zuordnungsabfrage, die von der Basisstation zurückgesendet wird, an die sie übertragen wurde; eine Messung der von der Basisstation zum gegebenen Zeitpunkt empfangenen Leistung t, $RSSI_j(t)$; der vom mobilen Endgerät zum gegebenen Zeitpunkt $t$ benötigte Durchsatz $D_j(t)$, eine Schätzung $R_j(t - 1)$ der Kanalkapazität der Abwärtsverbindung zum vorhergehenden Zeitpunkt $t - 1$; eine Schätzung $R(t - 1)$ der Summe der Kapazitäten der Abwärtsverbindungen der Benutzerausrüstungen zum vorherigen Zeitpunkt.

**8.** Zuordnungsverfahren von Benutzerausrüstungen zu Basisstationen eines Zellnetzes nach einem der Ansprüche 5 bis 7, **dadurch gekennzeichnet, dass** das wiederkehrende Neuronennetz eine Reihe von Experimenten hervorruft, die zu $e_j(t) = (o_j(t), a_j(t), r_j(t), o_j(t+1))$, jedem Experiment gehören, das zu einer Episode gehört, wobei $\{e_j(t); t=1,..., T\}$, ein Experiment als ein Vierfaches definiert ist, das aus dem Beobachtungsvektor $\mathbf{o}_j(t)$ zu der gegebenen Zeit $t$, der Aktion $a_j(t)$ besteht, die der Agent zu diesem Zeitpunkt aus der vom Controller für diese Aktion erhaltenen Belohnung und einem Beobachtungsvektor, $\mathbf{o}_j(t+1)$, zum nächsten Zeitpunkt auswählt, wobei die genannten Experimente in einem lokalen Speicher $M_j$ der Benutzerausrüstung $u_j$ gespeichert werden.

**9.** Zuordnungsverfahren von Benutzerausrüstungen zu Basisstationen eines Zellnetzes nach einem der Ansprüche 5 bis 8, **dadurch gekennzeichnet, dass** die synaptischen Koeffizienten des wiederkehrenden Neuronennetzes durch einen Parametervektor, $\theta_j$, dargestellt werden, wobei der Parametervektor durch ein stochastisches Absinken des Gradienten auf einer durch Mini-Chargen $L_j$ ( $\theta_j) = E_{e_j^b(t)\sim B_j}\left(\left[\delta_j^b(t)\right]^2\right.$ )gemittelten Verlustfunktion erhalten wird, wobei $\delta_j^b(t)$ ein TD-Fehler der Aktionswertvorhersage für ein Mini-Chargen-Experiment ist.

**10.** Zuordnungsverfahren von Benutzerausrüstungen zu Basisstationen eines Zellnetzes nach einem der Ansprüche 5 bis 8, **dadurch gekennzeichnet, dass** die synaptischen Koeffizienten des wiederkehrenden Neuronennetzes durch einen Parametervektor, $\theta_j$, dargestellt werden, wobei der Parametervektor durch ein stochastisches Absinken des Gradienten auf einer durch Mini-Chargen $L_j(\theta_j) =$ $\mathrm{E}_{e_j^b(t)\sim B_j}\left(\left[W_j^b\delta_j^b(t)\right]^2\right)$ gemittelten Verlustfunktion erhalten wird, wobei $\delta_j^b(t)$ ein TD-Fehler der Aktionswertvorhersage für ein Mini-Chargen-Experiment ist und $W_j^b = X$ wenn der TD-Fehler positiv ist, $W_j^b = \beta$ andernfalls, wobei $\beta$, $x$ tatsächliche Werte sind, die $0 < \beta << x \leq 1$ überprüfen.

**11.** Zuordnungsverfahren von Benutzerausrüstungen zu Basisstationen eines Zellnetzes nach einem der Ansprüche 1 bis 4, **dadurch gekennzeichnet, dass** das Zellnetz einer Vielzahl von Aufgaben ausgesetzt ist, wobei $T = \{T^{(1)}, T^{(2)},... T^{(N)}\}$, jede Aufgabe durch eine Reihe von Diensten definiert ist, die von den verschiedenen Benutzerausrüstungen benötigt werden, $T^{(n)} = \left\{T_1^{(n)}, T_2^{(n)}, ... T_{N_u}^{(n)}\right\}$, wobei $T_j^{(n)}$ einen Dienst darstellt, der von der Benutzerausrüstung $u_j$ in der Aufgabe $T^{(n)}$ benötigt wird, jede Aufgabe $T^{(n)}$, die eine Umgebungsklasse für alle Benutzer definiert; und dass der mit einer Benutzerausrüstung $u_j$ verbundene Agent die Aktionswerte der verschiedenen möglichen Aktionen mittels eines wiederkehrenden Neuronennetzes, dem Schülernetz, vorhersagt, das während einer Lernperiode an den jeweiligen Vorhersagen einer Vielzahl von wiederkehrenden Neuronennetzen, dem Masternetz, trainiert wurde, wobei jedes Masternetz mit einer Aufgabe des Netzes verbunden ist und an einer Reihe von im Rahmen dieser Aufgabe durchgeführten Experimenten $e_j(t) = (o_j(t), a_j(t), r_j(t), o_j(t+1))$ selbst trainiert wurde, wobei ein Experiment als ein Vierfaches definiert ist, das aus dem Beobachtungsvektor $\mathbf{o}_j(t)$ zu einer gegebenen Zeit t, der vom Agenten zu diesem Zeitpunkt ausgewählten Aktion $a_j(t)$ und der vom Controller für diese Aktion erhaltenen Belohnung und einem Beobachtungsvektor, $o_j(t+1)$ besteht, wobei die im Rahmen einer Aufgabe $T^{(n)}$ durchgeführten Experimente im lokalen Speicher $M_j^{(n)}$ der Benutzerausrüstung $u_j$ gespeichert werden.

12. Zuordnungsverfahren von Benutzerausrüstungen zu Basisstationen eines Zellnetzes nach Anspruch 11, **dadurch gekennzeichnet, dass** es nach dem Training jedes Masternetzes die Aktionswerte $Q_j\left(o_j(t)|\theta_j^{(n)^*}\right)$ für die Aktionsvektoren aus den im Rahmen der mit diesem Masternetz verbundenen Aufgabe durchgeführten Experimenten vorhersagt, wobei die Aktionswertvorhersagen mit den entsprechenden Beobachtungsvektoren in einem gemeinsamen Speicher für alle Aufgaben gespeichert werden, mit $SM_j$ bezeichnet und dass, nachdem alle Masternetze trainiert wurden, das Schülernetz auf überwachte Weise an den Trainingsdaten ( $o_j(t), Q_j\left(o_j(t)|\theta_j^{(n)^*}\right)$ ) trainiert wird, wobei $\mathbf{o}_j(t)$ der Eingangsvektor des Schülernetzes und $Q_j\left(o_j(t)|\theta_{1,j}^*\right)$ das verbundene Label ist.

## Claims

1. **A method** for associating user equipment with base stations of a cellular network, said association method implementing a multi-agent reinforcement learning method, an agent being associated with each user equipment, wherein:

   each user equipment $u_j$ determines a set $S_j$ of base stations in the coverage of each of which it is located;
   each agent associated with a user equipment selects, on the basis of a partial observation ($\mathbf{o}_j(t)$) of its environment at a given time, an action ($a_j(t)$) out of a plurality of possible actions, each possible action corresponding to a request to associate the user equipment with a base station ($BS_i \in S_j$) of said set, said action being selected on the basis of a strategy ($\pi_j$) aiming to maximize an action value calculated as the expected value of the sum of a plurality of future rewards, updated at said given time, the user equipment transmitting to a central controller an association request corresponding to the action thus selected;
   each base station determines whether each base station can satisfy all of the association requests received from the user equipment given the transmission resources that each base station has available and in the negative case informs the central controller thereof;
   the central controller calculates a reward ($r(t)$), common to the actions of the agents, and broadcasts the reward to all the user equipment, said reward being zero if one of the base stations cannot satisfy all of the association requests received and equal to the value taken by a utility function of the network, representative of the quality of service provided to the user equipment, otherwise.

2. The method for associating user equipment with base stations of a cellular network according to claim 1, wherein the utility function $U(t)$ of the network is equal to the sum of the capacities of the downlinks between the user equipment and the base stations that are associated with it or to the sum of the logarithms of these capacities.

3. The method for associating user equipment with base stations of a cellular network according to claim 1, wherein the utility function of the network is equal to $U(t)=\sum_{i,j} x_{ij} \min\left(D_j, R_{ij}\right)$ where $D_j$ is the bandwidth requested by a user equipment $u_j$ and $R_{ij}$ is the capacity of the downlink between the base station $BS_i$ and the user equipment $u_j$, $x_{ij}=1$ if the base station $BS_i$ is associated with the user equipment $u_j$ and $x_{ij}=1$ otherwise.

4. The method for associating user equipment with base stations of a cellular network according to claim 1, wherein the cellular network is a heterogeneous network consisting of a layer of macrocells and a layer of small cells, and wherein the central controller is located in the base station of a macrocell.

5. The method for associating user equipment with base stations of a cellular network according to claim 1, wherein the agent associated with a user equipment $u_j$ predicts the action values of various possible actions via a recurrent artificial neural network receiving at the input a vector of observation of the environment $\mathbf{o}_j(t)$ at a given time and providing at the output a prediction of the action values for the various possible actions corresponding to the base stations of the set $S_j$.

**6.** The method for associating user equipment with base stations of a cellular network according to claim 5, wherein the neural network comprises an input layer, a first plurality of densely connected layers, an LSTM layer, a second plurality of densely connected layers and an output layer.

**7.** The method for associating user equipment with base stations of a cellular network according to claim 5, wherein the vector of observation of the environment comprises the action $a_j(t\text{-}1)$ carried out by the user equipment $u_j$ at the preceding time; the response $ACK_j(t\ \text{-}1)$ to the association request, sent back by the base station to which it was transmitted; a measurement of the power received from the base station at the given time $t$, $RSSI_j(t)$; the bandwidth $D_j(t)$ requested by the mobile terminal at the time $t$, an estimation $R_j(t\ \text{-}1)$ of the channel capacity of the downlink at the preceding time $t$-1; an estimation $R(t\text{-}1)$ of the sum of the capacities of the downlinks of the user equipment at the preceding time.

**8.** The method for associating user equipment with base stations of a cellular network according to claim 5, wherein the recurrent neural network is trained on a set of experiments $ej(t)=(\mathbf{o}_j(t),\alpha_j(t),r_j(t),\mathbf{o}_j(t+1))$, each experiment belonging to an episode, $\{e_j(t);t = 1,..,T\}$, an experiment being defined as a quadruplet consisting of the observation vector $\mathbf{o}_j(t)$ at the given time $t$, the action $a_j(t)$ selected by the agent at said time, the reward received from the controller after said action, and an observation vector, $\mathbf{o}_j(t+1)$, at the following time, said experiments being stored in a local memory $M_j$ of the user equipment $u_j$.

**9.** The method for associating user equipment with base stations of a cellular network according to claim 5, wherein the synaptic coefficients of the recurrent neural network are represented by a parameter vector, $\theta_j$, said parameter vector being obtained by a stochastic gradient descent on a loss function averaged by mini-batch $L_j(\theta_j) = E_{e_j^b(t)\sim B_j}\left(\left[\delta_j^b(t)\right]^2\right)$ where $\delta_j^b(t)$ is a TD error in the prediction of action value for an experiment of the mini-batch.

**10.** The method for associating user equipment with base stations of a cellular network according to claim 5, wherein the synaptic coefficients of the recurrent neural network are represented by a parameter vector, $\theta_j$, said parameter vector being obtained by a stochastic gradient descent on a loss function averaged by mini-batch $L_j(\theta_j) = \mathrm{E}_{e_j^b(t)\sim B_j}\left(\left[W_j^b\delta_j^b(t)\right]^2\right)$ where $\delta_j^b(t)$ is a TD error in the prediction of action value for an experiment of the mini-batch and $w_j^b = \chi$ if the TD error is positive , $w_j^b = \beta$ in the contrary case, where $\beta,\chi$ are real numbers verifying $0 < \beta \ll \chi \leq 1$.

**11.** The method for associating user equipment with base stations of a cellular network according to claim 1, wherein the cellular network is confronted with a plurality of tasks $T = \{T^{(1)}, T^{(2)},.., T^{(N)}\}$, each task being defined by a set of services requested by the various user equipment $T^{(n)} = \left\{T_1^{(n)}, T_2^{(n)}, \ldots, T_{N_u}^{(n)}\right\}$ where $T_j^{(n)}$ represents a service requested by the user equipment $u_j$ in the task $T^{(n)}$, each task $T^{(n)}$ defining a class of environment for all the users; and that the agent associated with a user equipment $u_j$ predicts the action values of the various possible actions via a recurrent neural network, called student network, trained for a learning period on the respective predictions of a plurality of recurrent neural networks, called master networks, each master network being associated with a task of the network and itself trained on a set of experiments $e_j(t)= (\mathbf{o}_j(t),a_j(t),r_j(t),\mathbf{o}_j(t+1))$ carried out in the context of said task, an experiment being defined as a quadruplet consisting of the observation vector $\mathbf{o}_j(t)$ at the given time $t$, the action $a_j(t)$ selected by the agent at said time, the reward received from the controller after said action, and an observation vector, $\mathbf{o}_j(t+1)$, at the following time, the experiments carried out in the context of a task $T^{(n)}$ being stored in a local memory $M_j^{(n)}$ of the user equipment $u_j$.

**12.** The method for associating user equipment with base stations of a cellular network according to claim 11, wherein at the end of the training of each master network, the latter predicts the action values $\mathbf{Q}_j\left(\mathbf{o}_j(t)\middle|\boldsymbol{\theta}_j^{(n)*}\right)$ for the action vectors coming from the experiments carried out in the context of the task associated with said master network, said predictions of action value being stored with the corresponding observation vectors, in a memory common to all the tasks, noted as $SM_j$, and that after all the master networks have been trained, the student network is trained in a supervised manner on the training data ( $\mathbf{o}_j(t), \mathbf{Q}_j\left(\mathbf{o}_j(t)\middle|\boldsymbol{\theta}_j^{(n)*}\right)$ ), $\mathbf{o}_j(t)$ being the input vector of the student network and $\mathbf{Q}_j\left(\mathbf{o}_j(t)\middle|\boldsymbol{\theta}_{1,j}^{*}\right)$ being the associated tag.

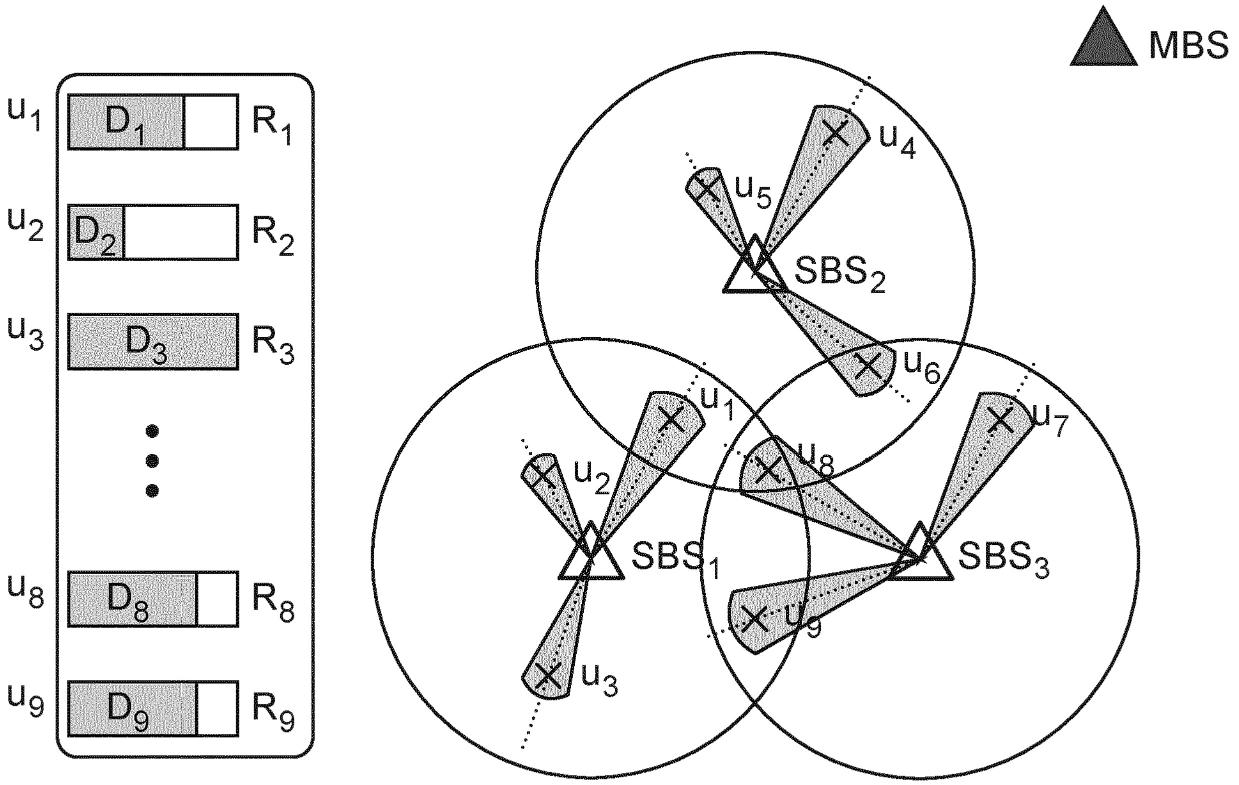
MBS
u1
D1
R1
u2
D2
R2
u3
D3
R3
u8
D8
R8
u9
D9
R9
u4
u5
SBS2
u6
u1
u7
u2
u8
SBS1
SBS3
u9
u3

Fig. 1

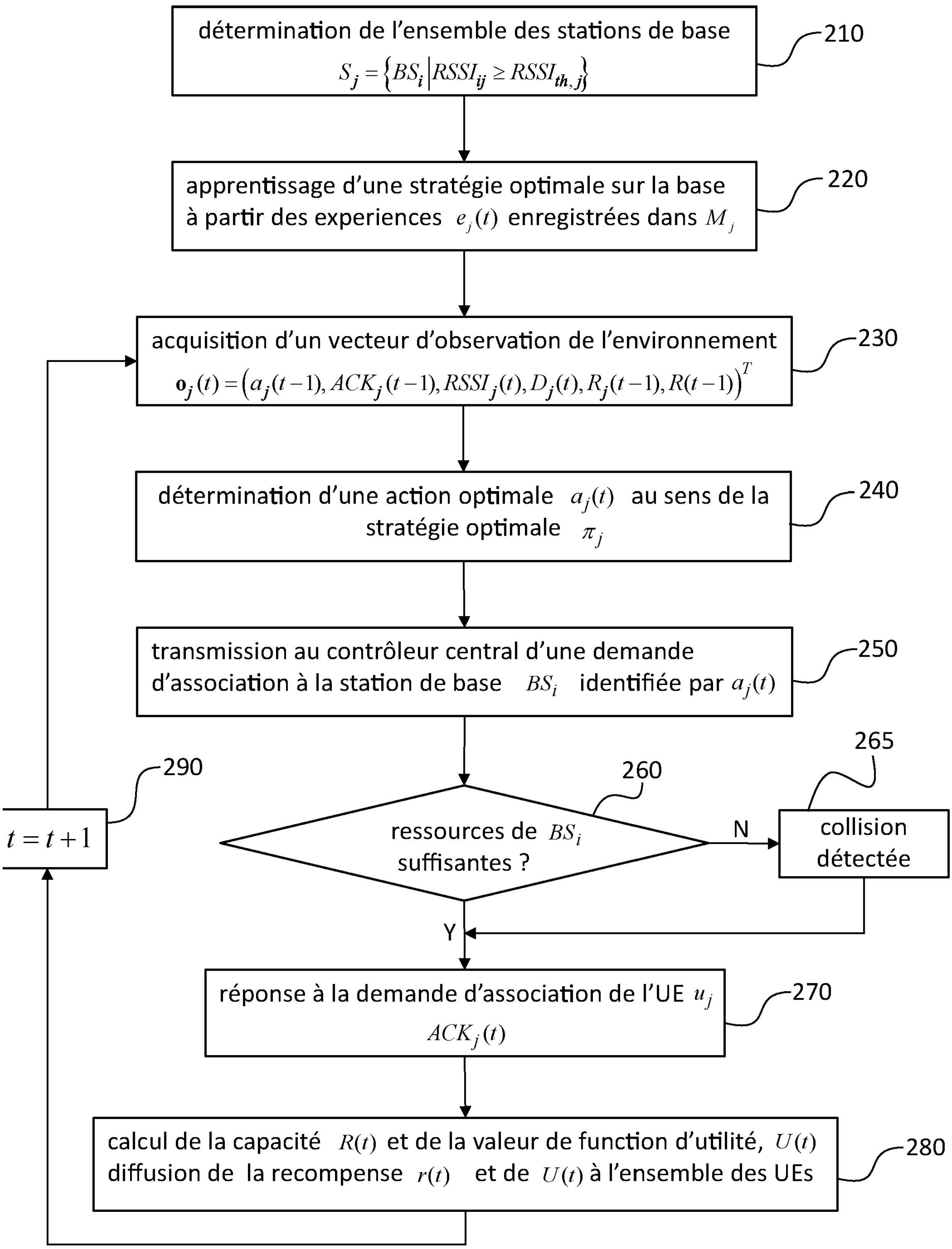
détermination de l'ensemble des stations de base
$S_j = \{BS_i | RSSI_{ij} \geq RSSI_{th,j}\}$
210
apprentissage d'une stratégie optimale sur la base
à partir des experiences $e_j(t)$ enregistrées dans $M_j$
220
acquisition d'un vecteur d'observation de l'environnement
$\mathbf{o}_j(t) = (a_j(t-1), ACK_j(t-1), RSSI_j(t), D_j(t), R_j(t-1), R(t-1))^T$
230
détermination d'une action optimale $a_j(t)$ au sens de la
stratégie optimale $\pi_j$
240
transmission au contrôleur central d'une demande
d'association à la station de base $BS_i$ identifiée par $a_j(t)$
250
ressources de $BS_i$
suffisantes ?
260
N
collision
détectée
265
Y
$t = t + 1$
290
réponse à la demande d'association de l'UE $u_j$
$ACK_j(t)$
270
calcul de la capacité $R(t)$ et de la valeur de function d'utilité, $U(t)$
diffusion de la recompense $r(t)$ et de $U(t)$ à l'ensemble des UEs
280

Fig. 2

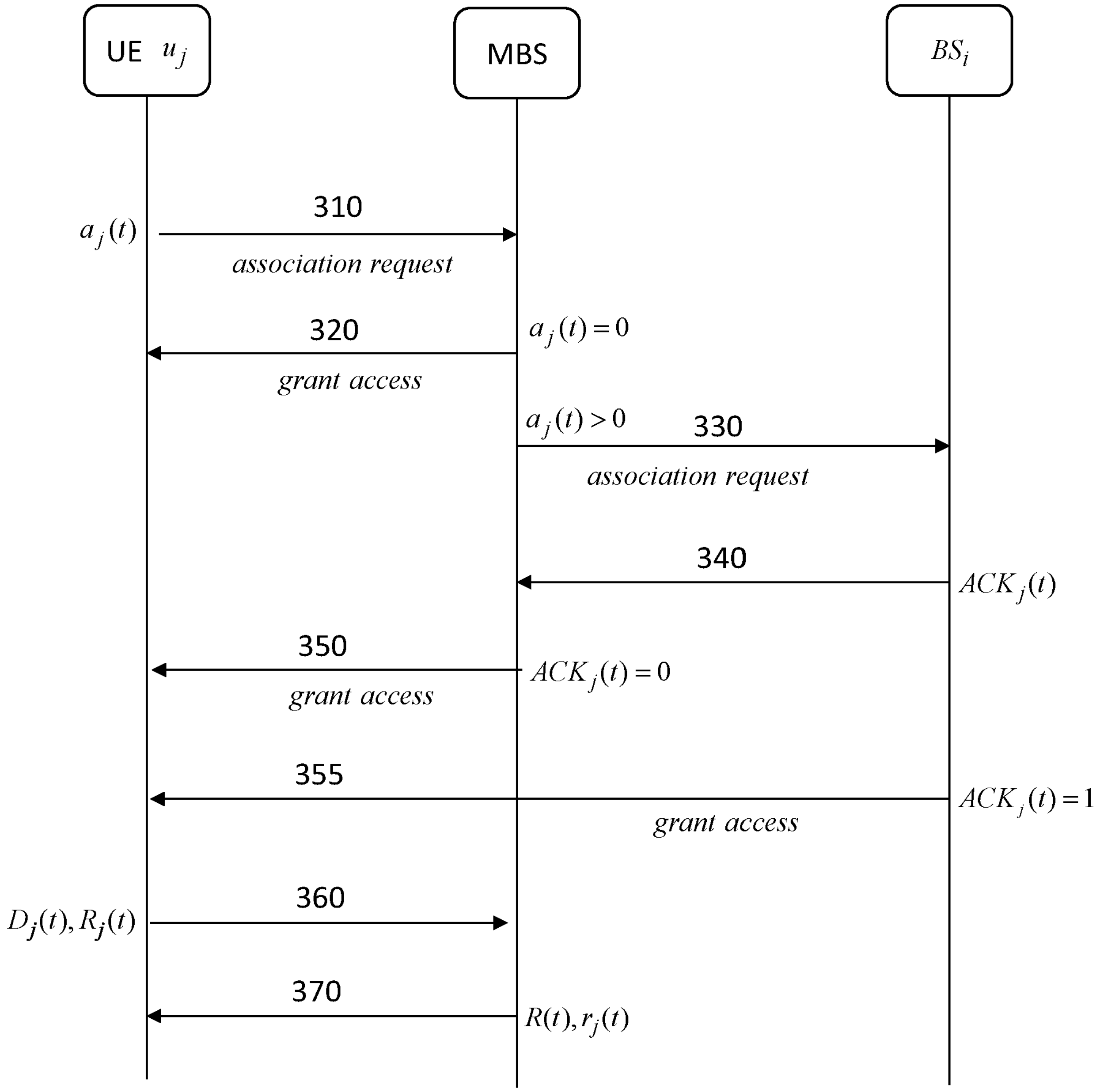
UE $u_j$
MBS
$BS_i$
$a_j(t)$
310
association request
320
$a_j(t)=0$
grant access
$a_j(t)>0$
330
association request
340
$ACK_j(t)$
350
$ACK_j(t)=0$
grant access
355
$ACK_j(t)=1$
grant access
360
$D_j(t), R_j(t)$
370
$R(t), r_j(t)$

**Fig. 3**

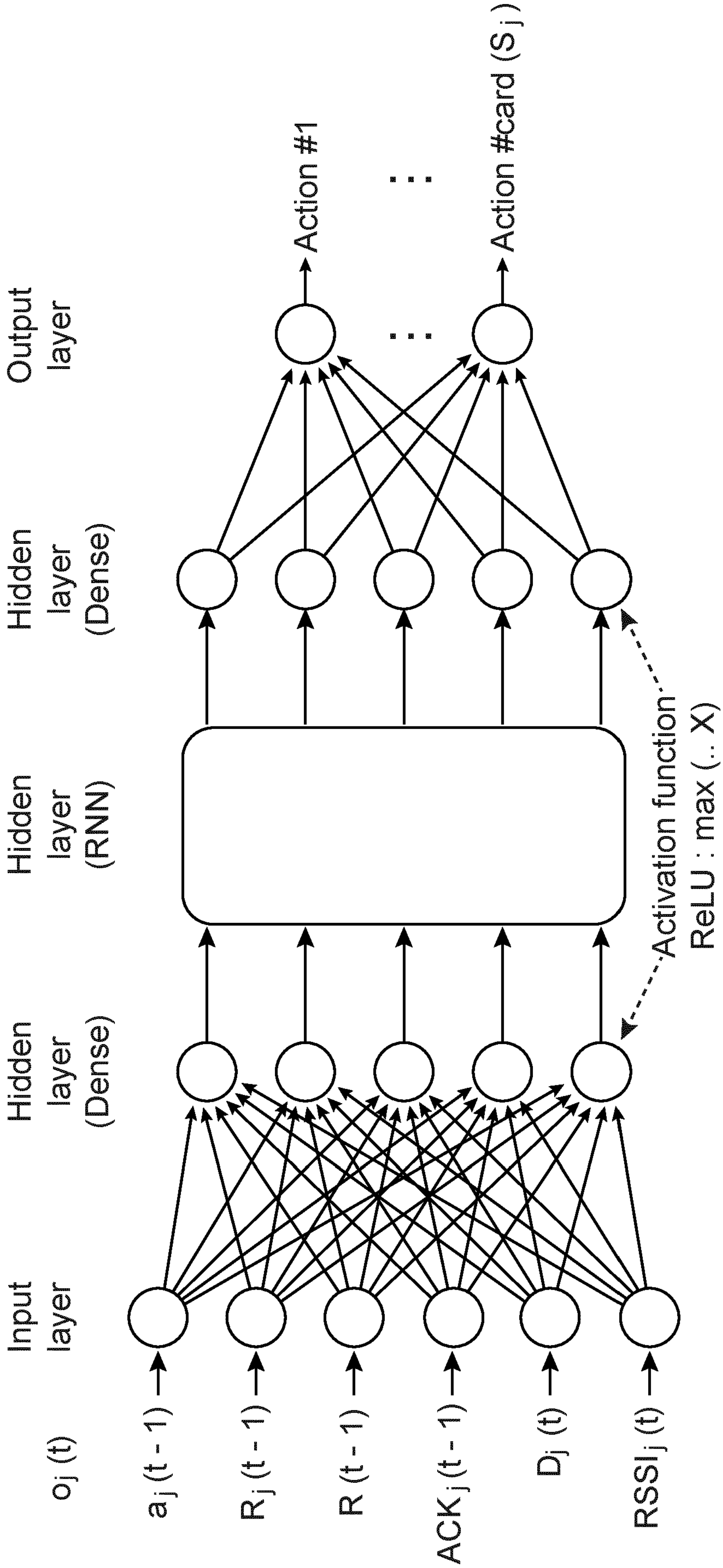

$o_j$ (t)
$a_j$ (t - 1)
$R_j$ (t - 1)
R (t - 1)
$ACK_j$ (t - 1)
$D_j$ (t)
$RSSI_j$ (t)
Input layer
Hidden layer (Dense)
Hidden layer (RNN)
Hidden layer (Dense)
Output layer
Action #1
...
Action #card ($S_j$)
Activation function
ReLU : max (.. X)


**Fig. 4**

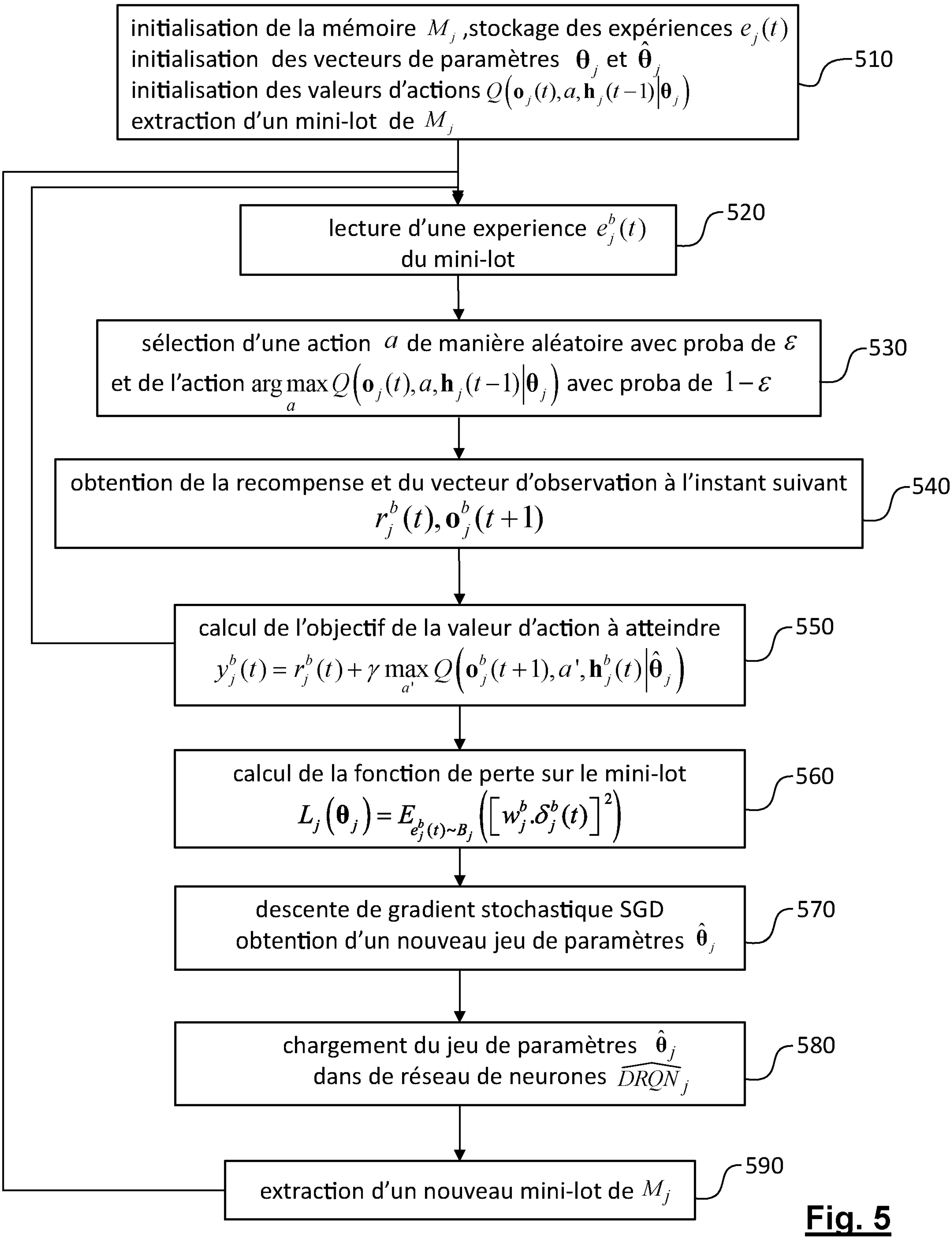
initialisation de la mémoire $M_j$ ,stockage des expériences $e_j(t)$
initialisation des vecteurs de paramètres $\boldsymbol{\theta}_j$ et $\hat{\boldsymbol{\theta}}_j$
initialisation des valeurs d'actions $Q\left(\mathbf{o}_j(t), a, \mathbf{h}_j(t-1) \middle| \boldsymbol{\theta}_j\right)$
extraction d'un mini-lot de $M_j$
510
lecture d'une experience $e_j^b(t)$ du mini-lot
520
sélection d'une action $a$ de manière aléatoire avec proba de $\varepsilon$ et de l'action $\arg\max_a Q\left(\mathbf{o}_j(t), a, \mathbf{h}_j(t-1) \middle| \boldsymbol{\theta}_j\right)$ avec proba de $1-\varepsilon$
530
obtention de la recompense et du vecteur d'observation à l'instant suivant $r_j^b(t), \mathbf{o}_j^b(t+1)$
540
calcul de l'objectif de la valeur d'action à atteindre $y_j^b(t) = r_j^b(t) + \gamma \max_{a'} Q\left(\mathbf{o}_j^b(t+1), a', \mathbf{h}_j^b(t) \middle| \hat{\boldsymbol{\theta}}_j\right)$
550
calcul de la fonction de perte sur le mini-lot $L_j\left(\boldsymbol{\theta}_j\right) = E_{e_j^b(t) \sim B_j}\left(\left[w_j^b . \delta_j^b(t)\right]^2\right)$
560
descente de gradient stochastique SGD obtention d'un nouveau jeu de paramètres $\hat{\boldsymbol{\theta}}_j$
570
chargement du jeu de paramètres $\hat{\boldsymbol{\theta}}_j$ dans de réseau de neurones $\widehat{DRQN}_j$
580
extraction d'un nouveau mini-lot de $M_j$
590

**Fig. 5**

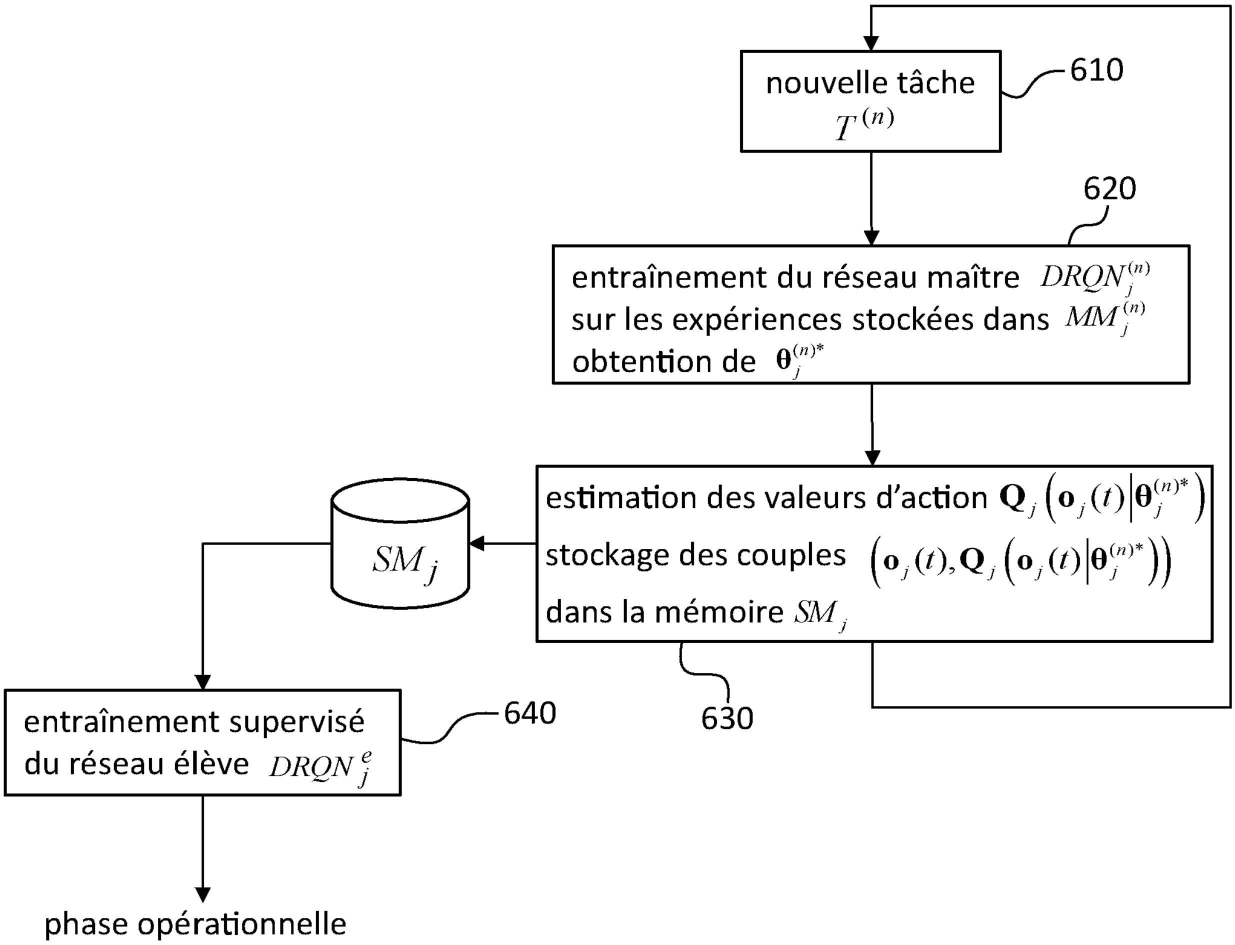
nouvelle tâche $T^{(n)}$
610
620
entraînement du réseau maître $DRQN_j^{(n)}$
sur les expériences stockées dans $MM_j^{(n)}$
obtention de $\boldsymbol{\theta}_j^{(n)*}$
$SM_j$
estimation des valeurs d'action $\mathbf{Q}_j\left(\mathbf{o}_j(t)\middle|\boldsymbol{\theta}_j^{(n)*}\right)$
stockage des couples $\left(\mathbf{o}_j(t),\mathbf{Q}_j\left(\mathbf{o}_j(t)\middle|\boldsymbol{\theta}_j^{(n)*}\right)\right)$
dans la mémoire $SM_j$
entraînement supervisé
du réseau élève $DRQN_j^e$
640
630
phase opérationnelle

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **N. ZHAO et al.** Deep Reinforcement Learning for User Association and Resource Allocation in Heterogeneous Cellular Networks. *IEEE Transactions on Wireless Communications*, 2019, vol. 18 (11), 5141-5152
- Deep reinforcement learning for user association and resource allocation in heterogeneous networks. *Proc. of IEEE Global Communications Conference (GLOBECOM)*, 2018, 1-6
- **C. WATKINS et al.** Q-learning. *Machine Learning*, 1992, vol. 8 (3-4), 279-292
- **RICHARD S. SUTTON** ; **ANDREW G. BARTO**. Reinforcement learning. 2018, 129-132
- **V. MNIH et al.** *Human-level control through deep reinforcement learning*, 26 February 2015, vol. 158, 529-541
- **A.A. RUSU et al.** Policy distillation. *arXiv:1511.06295v2*, 07 January 2016